# EUROPEAN PATENT APPLICATION

(11) **EP 3 012 737 A1**
(43) Date of publication of application: **27.04.2016**
(21) Application number: 14306693.4
(22) Date of filing: 24.10.2014
(51) Int. Cl.: G06F 9/45, G06T 15/00

(54) **Devices and methods for generating elementary geometries**

(71) Applicant: Thomson Licensing, 92130 Issy-les-Moulineaux (FR)
(72) Inventor: Marvie, Jean-Eudes, 35576 Cesson Sevigné Cedex (FR); Repain, Alex, 35576 Cesson Sevigné Cedex (FR); Hirtzlin, Patrice, 35576 Cesson Sevigné Cedex (FR)
(74) Representative: Huchet, Anne

(57) **Abstract**

Elementary geometries for rendering objects of a 3D scene are generated from input geometry data sets. Instructions of a source program (371) are transformed into a code executable in a rendering pipeline (32) by at least one graphics processor (12), by segmenting the source program into sub-programs (374), each adapted to process the input data sets, and by ordering the sub-programs in function of the instructions. Each ordered sub-program is configured in the executable code for being executed only after the preceding sub-program has been executed for all input data sets. Launching the execution of instructions to generate elementary geometries includes determining among the sub-programs a starting sub-program, deactivating all sub-programs preceding it and activating it as well as all sub-programs following it. Modularity is thereby introduced in generating elementary geometries, allowing time-efficient lazy execution of grammar rules.

## Description

### 1. Technical field

The invention relates to the domain of image generation or rendering in the representation of three-dimensional scenes. In particular, the present principles concerns synthesis image composition and geometry processing. It pertains to Computer Generated Image (CGI or 3D-CGI).

### 2. Background art

Grammar-based procedural generation in GPUs (Graphics Processing Units) consists in generating content algorithmically, based on a set of production rules in a formal language, also called a grammar. This is made instead of, or further to, exploiting manually pre-created and rendered works.

Such procedural generation is available notably through executing grammar-defined dataflow graphs using a dedicated API (Application Programming Interface) of a graphics pipeline. Such an API consists typically in OpenGL (Open Graphics Library) or Direct3D used in particular to render 3D graphics.

Usually, procedural generation is carried out by using a main processor and a memory of a computer. The generation process then requires complex data structures, which get modified and refined along a workflow. A current example of such a software application is CityEngine, developed by Esri R&D Center Zurich.

While this kind of approach is not problematic using a single main processor, it becomes intractable when implementing procedural generation on highly parallel architectures such as graphics hardware, in which completely independent pipeline stages are used.

Accordingly, as concerns heterogeneous systems involving both GPU and CPU (Central Processing Unit) capacities, several compiler frameworks have been developed for the creation and the execution of dataflow graphs, appropriate to accelerating the execution of general-purpose programs. In this respect, parallel sections of programs are running on the GPU, which provides high data-level parallelism thanks to its massively parallel architecture.

Such implementations include in particular OpenMPC API (OpenMP extended for CUDA), described by S. Lee and R. Eigenmann in "OpenMPC: Extended OpenMP for Efficient Programming and Tuning on GPUs", Int. J. Computational Science and Engineering, Vol. 7, No. 1, 2012; *Sponge,* a streaming compiler for Streamlt language described by A. Hormati et al. in "Sponge: Portable Stream Programming on Graphics Engines", available online from the ASPLOS 2011 Conference (Architectural Support for Programming Languages and Operating Systems) in California (http://cccp.eecs.umich.edu/papers/hormati-asplos2011.pdf); and the BSGP programming language, presented by Q. Hou, K. Zhu and B. Guo in "BSGP: Bulk-Synchronous GPU Programming", dated 2008 and also available online at http://www.kunzhou.net/2008/BSGP.pdf. All these compiler frameworks rely on the CUDA parallel computing platform and programming model (Compute Unified Device Architecture), developed by NVIDIA Corporation, which is directed to multi-threaded SIMD (Single Instruction Multiple Data) and provides memory and threading abstractions.

Such systems are however not directly available for graphics pipelines in the execution of dataflow graphs - such as through OpenGL or Direct3D APIs, and involve by contrast the generation of geometries in CPUs upstream their exploitation in GPUs. This proves a significant drawback for efficient rendering of procedurally-generated objects.

A programming model has further been proposed for graphics pipelines, named GRAMPS (General Runtime/Architecture for Multicore Parallel Systems) and introduced by J. Sugerman et al. in "GRAMPS: A Programming Model for Graphics Pipeline", ACM Transactions on Graphics, Vol. 28, No. 1, Art. 4, Jan. 2009. It provides an abstraction for expressing advanced graphics pipelines by exposing a model of execution containing both fixed-function and application-programmable processing stages that exchange data and communicate asynchronously via queues. An additional thread stage is exploited further to conventional shader stages for synchronization purpose.

This GRAMPS technology, which proposes a lower level of abstraction than the OpenGL or Direct3D APIs, involves complex tasks for notably defining the stages and corresponding queues.

In previous patent application published on July 18, 2013 as WO 2013/104448 A1 in the name of Thomson Licensing (having as inventors C. Buron, J.-E. Marvie and P. Gautron), a grammar-based method has been introduced, which enables rendering a synthesis image on GPU using an API of the graphics pipeline - such as OpenGL or Direct3D. A plurality of elementary geometries can thereby be generated from an input geometry using a grammar represented by a tree within the GPU. Accordingly, efficient data-parallelism can be achieved, marking possible procedural generation and rendering of large landscapes. In addition, geometry generation can be based on an expression-instantiated grammar-language interpreter running on the GPU, such as described in patent application WO 2013/104504 A1 to Thomson Licensing published on July 18, 2013 (inventors J.-E. Marvie et al.).

Based on the teaching of both contributions, a convenient method is available for a static two-pass GPU pipeline: a first pass dedicated to geometry generation, from input geometry to buffers storing the terminal structure; and a second pass dedicated to rendering, through terminal evaluator and renderer stages. Such a pipeline offers a lazy grammar re-evaluation mechanism, since it makes possible to re-execute only the render pass when the input data and parameters are kept unchanged, insofar as the stored terminal structure remains valid.

However, any grammar parameter modification requires a complete geometry re-generation pass, which could take significant time for complex grammar tree.

### 3. Summary

A purpose of the present disclosure is to overcome the disadvantages of the prior art, by making possible a flexible and efficient geometry generation available to a GPU pipeline, even in case of the modification of grammar parameters.

A further purpose of the present disclosure is a tool for grammar-based procedural generation, potentially well-suited to GPU-directed API such as OpenGL or Direct3D and convenient to developers.

In this respect, the present disclosure relates to a device configured for enabling to generate elementary geometries usable for rendering at least an object of a 3D scene, from a source program comprising a plurality of instructions adapted to generate the elementary geometries from input geometry data sets.

This device is being configured to transform those instructions into a code executable in a rendering pipeline by at least one graphics processor for generating the elementary geometries.

According to the present disclosure, the device comprises:
- a segmenting module adapted to segment the source program into at least two sub-programs, each comprising a part of the instructions and being adapted to process the input geometry data sets,
- an ordering module adapted to order those sub-programs in function of those instructions.

The segmenting module and ordering module are configured such that each of the ordered sub-programs following a preceding of the ordered sub-programs is configured in the executable code for being executed only after the preceding sub-program has been executed for all the input geometry data sets.

The present device is to be understood preferably as an apparatus, or a physical part of an apparatus, designed, configured and/or adapted for performing the mentioned functions and produce the mentioned effects or results. In specific implementations, the device is constituted by a CPU. Alternatively, the device is an apparatus including both a CPU and one or several GPUs, which then preferably include the graphics processor(s) used by the device of the disclosure.

In other non-limiting embodiments, it consists in a PLD (Programmable Logic Device), such as an FPGA (Field-Programmable Gate Array). More generally, it is advantageously made from a part of a computer, whether available separately or integrated therein, dedicated to compilation operations (compiler).

In further implementations, the device is embodied as a set of apparatus or physical parts of apparatus, whether grouped in a same machine or in different, possibly remote, machines. In the latter case, the device of the present disclosure amounts to a system.

The modules of this device are to be understood as for them as functional entities rather than material, physically distinct, components. They can consequently be embodied either as grouped together in a same tangible and concrete component, or distributed into several such components. Also, each of these modules is possibly itself shared between at least two physical components inside the device.

In addition, the modules are implemented in hardware, software, firmware, or any mixed form thereof as well.

As a whole, the modules are preferably embodied within at least one processor of the device.

The terms "adapted" and "configured" are further used in the definition of the present disclosure as broadly encompassing initial configuration, later adaptation or complementation of the present device, or any combination thereof alike, whether effected through material or software means (including firmware).

The input geometry data sets advantageously consist of grammar seeds, adapted to be processed by the rendering pipeline in the graphics processor(s). Also, the latter is preferably able to take care of the input geometry data sets in parallel, thereby enabling potentially high data-parallelism capacities. This leads to enabling the procedural generation and rendering of large landscapes.

The graphics processor(s) advantageously include processing cores of at least one GPU, the number of cores ranging from a few ones to several hundreds (e.g. 300) in various implementations of the disclosure. For sake of pure illustration, a GPU in a specific embodiment comprises 24 warps, each of which including 4 blocks of 8 threads - which makes 768 threads in the GPU. In another specific embodiment, the GPU comprises a unique warp including 16 blocks of 32 threads - which amounts to 512 threads in the GPU.

The present device is particularly appropriate for possibly offering high modularity in the execution of data-parallel geometry generation through the rendering pipeline, by means of the graphics processor(s).

Namely, the sub-programs obtained in the present device can offer a sequential chain of execution, in which data-parallelism is preferably privileged in combination with task-sequential execution. Accordingly, each sub-program execution is then associated with a geometry generation pass. Also, the device is adapted to direct exploitation of a graphics pipeline, such as with OpenGL or Direct3D APIs for the execution of dataflow graphs.

Especially, the present disclosure makes possible only a partial re-generation pass when a grammar parameter is modified, instead of a systematic complete re-generation pass involving a whole grammar tree. Indeed, only the sub-programs derived from the source program and affected by the parameter modification (directly or through upstream modifications) need to be activated. This can thereby offer possibly significant improvement in processing efficiency, by time-efficient lazy execution of grammar rules upon a grammar parameter modification.

It deserves also noting that by having each sub-program executed only after the preceding one has been executed for all the input geometry data sets, a constructive scheduling mechanism is made possible. In particular, this can enable synchronization during geometry generation, especially with data-parallel generation. Dataflow execution can thus be supported notably by a grammar-based synchronization based on OpenGL or Direct3D APIs.

Further, a grammar rule can become able to retrieve results from several predecessor rules to generate new elementary geometries, since execution is fully over (namely for all input geometry data sets) for all preceding sub-programs when the execution of a following sub-program is started.

Another interesting aspect of the present device is that it is configured to act on a source program, by transforming related instructions so as to obtain part of a rendering pipeline. Such a transformation can possibly offer a full switch from a first language environment, preferably associated with a high-level CPU-directed programming language, to a second language environment, preferably well-suited to graphics processors.

The high-level programming language enables the use of natural language elements, i.e. elements with strong abstraction from the details on the computing device on which the source program is processed - which contrasts with machine language or low-level programming language. It can typically be C++. On the other hand, the language well-suited to graphics processors can typically consist of HLSL (High Level Shader Language) or GLSL (OpenGL Shading Language), while the code executable by the graphics processor(s) is in a machine language directly interpretable by the latter, typically a byte code. In this respect, the present device is preferably adapted to a classical rendering pipeline, usable by widespread existing systems.

Accordingly, the device in appropriate embodiments can possibly be particularly convenient, easy to handle and/or flexible for developers. Indeed, they may just need to prepare the source program in appropriate ways, without being embarrassed by complex successive handling operations which could be required for directly defining modules, determining cooperation between them and ensuring correct execution scheduling, before being able to produce a code executable in a rendering pipeline. By contrast, the present device can possibly start directly from the source program adapted to generate the elementary geometries, and output the code executable in the rendering pipeline by the graphics processor(s).

Significantly, the present device is liable to offer a grammar-based compilation scheme particularly relevant to procedural generation and rendering on GPU(s), and to OpenGL or Direct3D APIs.

Preferably, the source program is provided with indications explicitly directed to the sub-programs to be extracted and exploited for geometry generation. This takes advantageously the form of user instructions. Thereby, a user-defined modularity can be introduced.

However, in variant implementations, the device of the disclosure comprises an automatic analyser, typically relying on heuristic capacities, able to extract appropriate sub-programs. This can amount to merely determining nodes in a grammar tree corresponding to the source program, where each node is directed to the processing of the input geometry data sets, notwithstanding loops as well as parallel or sequential execution between nodes. The nodes are then associated with respective sub-programs. Indeed, as well be clearer below, preferred embodiments are adapted to taking loops and parallel execution in consideration in arranging the sub-programs, so that a sequential execution thereof is made possible.

Preferably, the device further comprises a synchronization module configured to associate each of the preceding sub-programs with a respective synchronization memory element. The latter is adapted to receive the input geometry data sets from the preceding sub-program and to make them available to the following sub-program. The synchronization module is further configured to make the input geometry data sets available to the following sub-program in the synchronization memory element only when the preceding sub-program has been executed for all the input geometry data sets.

Synchronization is thereby ensured at least partly by such memory elements, which provide an efficient and convenient way to meet the condition associated with successive sub-programs executions as stated in the definition of the present device.

Also, those synchronization memory elements are advantageously corresponding to memory elements usually exploited in the rendering pipeline for recording output elementary geometries made available to later rendering operations.

As will be apparent to persons skilled in the art, such synchronization memory elements can be found in currently exploited systems - typically with APIs - at least in the form of VBOs (Vertex Buffer Objects). Those VBOs are currently used for storing vertex array data. They are usually associated with Transform Feedback mechanisms, which consist in capturing primitives generated by the vertex processing steps and in recording data from those primitives into Buffer Objects such as VBOs. According to currently existing applications, this enables to preserve the post-transform rendering state of objects, and thus to allow multiple later re-submissions of those data.

Exploiting the same for the synchronization module as stated above for the present device is thus a diversion of well-known and widely available mechanisms, leading however to quite unexpected applications. Accordingly, the input geometry data sets can be transmitted from a sub-program to a next by means of VBOs, while enabling at the same time a synchronization thanks to the existing Transform Feedback features.

Since the mechanism of VBOs and Transform Feedback allows multiple sequential geometry generation passes before a final rendering pass, a geometry generation pass can hence be notably created for each dataflow graph node corresponding to an expression-instantiated grammar-language interpreter, in the frame of a task-sequential execution pipeline.

Advantageously, the segmenting module is further configured so that each of the sub-programs is adapted to be executed in parallel for the respective input geometry data sets.

As seen above, such a parallelism is typically available in GPUs, via the constructed rendering pipeline. It should be noted however that though the present device is advantageously adapted (upstream) to the parallel data executions by the sub-programs for all input geometry data sets, this parallelism is not systematically executed downstream in the graphics processor. Indeed, this depends on the effective parallelism capacities, linked notably to the number of cores available for respective threads, with respect to the number of demanded processes corresponding to the input geometry data sets. In case the number of cores is insufficient for dealing with all input data sets, some of the latter are then grouped for being taken care of by same cores.

Basically, anyway, the inherent task-parallelism of dataflow graphs can thus be replaced by a data-parallelism on grammar seeds - constituted by the input geometry data sets.

In particular embodiments, the segmenting module is further configured to segment the source program according to segmentation instructions comprised in the instructions and in the ordering module is further configured to order the sub-programs according to parameters associated with the segmentation instructions.

Such instructions can be explicitly chosen and indicated by developers when writing the source program, the segmentation instructions and associated parameters being jointly considered for sake of consistency and efficient implementation. In practice, the present disclosure can make this writing easy and convenient to developers in appropriate implementations.

In variant upstream implementations, the segmentation instructions and associated parameters are determined automatically, based on consistency and efficiency criteria, so as to produce an appropriate source program to be dealt with by the present device.

As mentioned above, the present disclosure also covers embodiments in which no such segmentation instructions and associated parameters are included in the source program, and in which the device comprises heuristic capacities making it able to segment and order based on internal program analysis.

Preferably, the segmenting module and the ordering module are configured to associate at least one of the preceding sub-programs and at least one of the following sub-programs with at least one intermediate memory element, adapted to store intermediate elementary geometries generated by executing the preceding sub-program(s) and exploited by the following sub-program(s). Also, the intermediate memory element(s) being specified in the source program, the ordering module is configured to order the sub-programs in function of the intermediate memory element(s).

The intermediate memory element(s) thereby play a double combined function of transmission of the intermediate elementary geometries, and of upstream ordering of the sub-programs. The latter aspect is relevant to the advantageous presence of parameters associated with segmenting instructions in the source program.

Anyway, in some specific alternative embodiments, the intermediate memory elements are specified in the source program without including therein the segmentation instructions. Namely, the device is then configured for segmenting the source program based on heuristic capacities, while taking a number of memory elements specified in the source program into account - among which the intermediate memory elements, considered as such once the sub-programs are determined.

Preferably, the exploitation of the intermediate memory elements is combined with the use of the synchronization memory elements mentioned above, the two types of memory elements being distinct in the implementations. They thereby provide complementary features and related advantages.

Accordingly, in particularly interesting embodiments, procedural data (data used for procedural generation) are then transmitted from a graph node to successor nodes:
- by the synchronization memory elements for the input geometry data sets, which makes possible to keep initial data parallelism;
- by the intermediate memory elements for the intermediate elementary geometries generated within node execution;
- by at least one rendering memory element for ready-to-render elementary geometries generated from a grammar terminal rule within node execution.

Still more specifically in preferred implementations exploiting VBO and Transform Feedback, the respective roles of the memory elements are as follows:
Except for the penultimate node, corresponding to a last generation pass, each node execution related to each of the grammar seeds:
   - forwards the grammar seed to the VBO of the next Transform Feedback,
   - reads from input intermediate memory elements the input intermediate elementary geometries generated from the grammar seed by the node predecessors,
   - for each of the input intermediate elementary geometries, develops the grammar rules of the sub-program associated with the concerned node to generate new elementary geometries,
   - stores the newly generated elementary geometries for the grammar seed either in the rendering memory element or in a defined output intermediate memory element.

The execution of each penultimate node related to the considered grammar seed:
- copies the ready-to-render geometries issued from the rendering memory element to a VBO dedicated to rendering, noted VBOrender,
- reads from input intermediate memory elements the input intermediate elementary geometries generated from the grammar seed by the node predecessors,
- for each of the input intermediate elementary geometries, develops the grammar rules of the sub-program associated with the concerned node to generate new elementary geometries,
- stores the newly generated elementary geometries for the grammar seed in the VBOrender.

The intermediate memory elements, as well as the rendering memory element(s) when exploited, consist preferably in buffers. In particular implementations, the latter are provided by 2D texture samplers - a sampler being a set of variable types in GLSL or HLSL, this type being here a two-dimensional texture.

In advantageous embodiments, the ordering module is configured to order the sub-programs by determining the sub-programs to be executed sequentially and the sub-programs able to be executed in parallel, and by ordering the sub-programs able to be executed in parallel in a successive order.

The sequential arrangement of the sub-programs is thus met, while the effective execution relationship between the sub-programs is taken into consideration. Indeed, any selected sequential order for the sub-programs able to be executed in parallel is correct.

A particularly efficient way of determining the sequential time chaining of sub-programs together with the parallel processing potentialities has been developed in previous patent application EP-2779101 A1 to Thomson Licensing, published on September 19, 2014 (inventors J.-E. Marvie, P. Hirtzlin, O. Mocquard) and is referred to in the present disclosure.

Though directed to animation graphs, some substantial teaching of this prior art is applicable to the present situation. Based on it, it proves particularly appropriate that the ordering module be configured:
- to map the sub-programs to respective nodes of a graph representing the source program, said nodes being connected by paths, the paths being representative of dependencies between the nodes,
- to assign the nodes to at least two clusters according to a clustering information item associated with each node, that clustering information item being representative of a dependency counter according to the dependencies between the nodes.

Namely, the sub-programs define the nodes of a dataflow graph, the edges of this graph (i.e. the links connecting the nodes) corresponding to the sub-program execution dependencies. Usually, this dataflow graph is a Rooted Cyclic Directed Graph (RCDG), having a root node that corresponds to a set of rules containing a grammar axiom rule (i.e. a start rule).

The exploitation of the clusters makes possible the identification of groups of sub-programs, each group being associated with at least one time execution step and the groups following each other in operation in a sequential way. Preferably, each cluster corresponds to a unique execution step, i.e. all nodes in a cluster can be executed without any time constraint between them. Since in the present preferred implementation, all sub-programs are arranged in a successive order, this leads to ordering the nodes for each cluster in any successive order rather than implementing task parallelism.

Advantageously, it is proceeded as follows:
The nodes of the dataflow graph are initially connected by pairs with paths, the paths representing dependencies between the nodes. Then, the clusters of nodes are defined from the considered dataflow graph, the generated nodes clusters forming a flow vector. The clusters of nodes are ordered in the flow vector so as to meet the dependencies between the nodes. This flow vector is generated cluster after cluster, based on the node dependencies of the associated graph.

In still preferred related implementations, the dependency counter is dynamically associated with each node of the dataflow graph so as to assign the nodes to the clusters in the following way (this is a direct adaptation of the description given in the EP-2779101 A1 publication in relation with its Figure 4B). The dependency counter is determined according to dependencies existing between the nodes. Advantageously, it is first initialized to the number of direct predecessors related to the corresponding node. Then, all the nodes having no predecessor (i.e. a null dependency counter) are placed in the first cluster of the flow vector - these nodes having no dependency and being ready to be evaluated. Each insertion of a node in a cluster of the flow vector decrements the dependency counter of all its direct successors. For example, the insertion of the nodes in the first cluster decrements by one the dependency counter of all its direct successors. All nodes having an updated dependency counter equal to zero are then assigned to a second cluster and the dependency counters of their direct successors in the graph are each decremented by one. The new nodes having then an updated dependency counter equal to zero are assigned to a third cluster and so on.

As regards loops or cycles between nodes, they are preferably addressed according to a specific processing which amounts to breaking the loop for classifying the involved nodes (as described in the EP-2779101 A1 publication in relation with its Figure 6). Namely, a loop involves that at least one node has a direct predecessor that is at the same time a direct or indirect successor to this node. Consequently, the dependency counter for this node does not reach zero, so that the node is visited without being inserted in the flow vector. This results in an empty cluster in the flow vector, corresponding to the position of the node. The adopted solution consists in tagging a node which is visited and not inserted, to detect a loop by means of an empty cluster, and to break the detected loop by forcing the addition of the tagged node to this empty cluster.

As a whole, with respect to the EP-2779101 A1 prior art, the present advantageous implementation with topological sorting differs in that:
- there is no need to handle parallel and sequential batches for each cluster in relation with runtime side effect management;
- the cycles are detected and broken to construct the flow vector as previously done, but remain valid for runtime execution - a node can be executed even if some input buffers are empty;
- the nodes are ordered by iterating on the flow vector, since all the nodes belonging to a same cluster can be executed sequentially in any arbitrary order.

By implementing this solution, the RCDG dataflow graph is turned into a sequential execution of ordered nodes in the rendering pipeline, suited to a GPU target environment. Execution dependencies are thereby ensured when effecting geometry generation passes respectively associated with nodes executions.

As suggested above and more generally, the ordering module is preferably configured to order the sub-programs without consideration of any feedback loop between sub-programs.

Such feedback loops or cycles are later considered for geometry generation during runtime execution.

According to a preferred implementation, the source program being expressed in a source language, the present device comprises at least one compiling module adapted to translate the sub-programs expressed in the source language to a target language supported by the graphics processor(s).The source language is preferably a high-level programming language, while the target language is preferably a language adapted to a GPUs environment, such as HLSL or GLSL.

Advantageously, an expression-instantiated grammar-language interpreter is created for each sub-program source code on GPU target environment. A dataflow graph can then be created, in which each sub-program interpreter corresponds to a node and in which sub-program execution dependencies are associated with edges.In more particular implementations, the source program comprising at least one rule not supported by the graphics processor(s), the compiling module is configured for:
- generating for each of the sub-programs a directed graph representative of that sub-program,
- generating a first data structure, the first data structure corresponding to a flat representation of the directed graph and comprising at least an identifier identifying that at least one rule,
- generating a second data structure comprising interpretation instructions adapted for interpreting the first data structure by using that identifier, the interpretation instructions being coded in that target language.

This implementation is fully in line with prior patent application WO 2013/104504 A1 to Thomson Licensing, the teaching thereof being applied to the sub-programs of the present device. Like in this prior art, the rule not supported by the graphics processor(s) typically corresponds to a recursive algorithm.

Advantages embodiments described in the WO 2013/104504 A1 publication and relevant to the present compiling module, taken separately or in any possible combination, include notably:
- having a lexical analyzer performing a lexical analysis of the concerned sub-program, the sub-program being divided into small pieces of code called token during the lexical analysis;
- having one or more parser performing syntax and semantic analysis during parsing processes, the syntax analysis enabling to identify the syntactic structure of the sub-program by parsing the sequence of tokens and to form a parse tree replacing the linear sequence of tokens, and the semantic analysis enabling to add semantic information to the parse tree, thereby yielding a decorated parse tree or abstract syntax tree (AST);
- having a code generator performing code generation, and generating the first and second data structures;
- using for the interpretation instructions a library of functions of the target language (also called built-in functions) corresponding to the code in the target language of each rule of the source language, as well as a function in the target language used to read the first data structure at runtime;
- exploiting a further data structure comprising a set of global parameters extracted from the considered sub-program, a global parameter corresponding to a parameter that may be used by several different rules and modified at runtime in the target language, that further data structure taking advantageously the form of a map giving values taken by global parameters (associated with one direction, such as lines) for respective procedural seeds on which the sub-program is applied (associated with the other direction, such as columns);
- exploiting an additional data structure, comprising a set of instructions in the target language enabling to read and interpret at runtime the further data structure comprising global parameters, by using functions added to this additional data structure.

A skilled person will find various additional advantageous features relevant to the present disclosure in this prior publication.

The present disclosure also concerns an execution pipeline device comprising at least one processor configured to launch the execution of instructions adapted to generate elementary geometries usable for rendering at least one object of a 3D scene, from input geometry data sets.

According to the present disclosure, the instructions being grouped into at least two ordered sub-programs, each comprising a part of those instructions and being adapted to process the input geometry data sets, and each of the sub-programs that follows a preceding of the sub-programs being arranged for being executed only after that preceding sub-program has been executed for all said input geometry data sets, the processor(s) is or are further configured to:
- determine among the ordered sub-programs, a starting sub-program from which execution is needed,
- deactivate all sub-programs preceding that starting sub-program,
- activate that starting sub-program and all sub-programs following that starting sub-program.

That execution pipeline device is to be understood preferably as an apparatus, or a physical part of an apparatus, designed, configured and/or adapted for performing the mentioned functions and produce the mentioned effects or results. In specific implementations, the device is constituted by a CPU. Alternatively, the device is an apparatus including both a CPU and one or several GPUs, which then preferably include the graphics processor(s) used by the device of the disclosure.

The execution pipeline device is preferably adapted to a device configured for enabling to generate elementary geometries according to the present disclosure. The latter then provides the compilation part while the former provides the associated launching part, applied to the rendering pipeline including the executable code obtained from the source program. Preferably, a same compiler creates both the code executable in the rendering pipeline (corresponding to the device for enabling to generate elementary geometries) and a pipeline launcher (corresponding to the execution pipeline device).

This execution pipeline device can prove particularly time-efficient in that it relies on a lazy execution of grammar rules upon a grammar parameter modification. That significant potential advantage is made possible thanks to the modularity introduced in the generation part of the execution pipeline.

The pipeline launcher provided by the execution pipeline device is preferably called at each frame at runtime.

According to a preferred implementation of the execution pipeline device, the processor(s) is or are further configured to determine the starting sub-program for one frame when the sub-programs involve no active feedback loop:
- when that frame is a first frame, by setting the starting sub-program to the first of the sub-programs,
- when that frame is a special frame for which at least one parameter associated with at least one of the sub-programs is modified on-the-fly, by setting the starting sub-program to the first of those associated sub-program(s),
- when that frame is a frame different from the first frame and from the special frame, by setting the starting sub-program to the last of the sub-programs, associated with rendering the object(s) of a 3D scene.

According to another preferred implementation, advantageously combined with the previous one so as to cover the various situations, the processor(s) is or are further configured to determine the starting sub-program for one frame when the sub-programs involve at least one active feedback loop from at least one next sub-program to at least one previous sub-program among the sub-programs:
- when that frame is a first frame, by setting the starting sub-program to the first of the sub-programs,
- when that frame is a special frame for which at least one parameter associated with at least one of the sub-programs is modified on-the-fly and that associated sub-program is preceding the first of those previous sub-programs, by setting the starting sub-program to the first of those associated sub-programs,
- when that frame is a frame different from the first frame and from the special frame, by setting the starting sub-program to the first of those previous sub-programs corresponding to the active feedback loop(s).

By "active feedback loop", it is meant a loop or cycle between sub-programs or associated nodes, which is still operational at the considered runtime step. For example, a feedback loop is no longer active once all iterations have already been executed.

The present disclosure also pertains to a method for enabling to generate elementary geometries usable for rendering at least an object of a 3D scene, from a source program comprising a plurality of instructions adapted to generate the elementary geometries from input geometry data sets.

That method includes transforming by a device those instructions into a code executable in a rendering pipeline by at least one graphics According to the present disclosure, the method comprises:
- segmenting the source program into at least two sub-programs, each comprising a part of those instructions and being adapted to process the input geometry data sets,
- ordering the sub-programs in function of those instructions, the segmenting and ordering being such that each of the ordered sub-programs following a preceding of the ordered sub-programs is configured in the executable code for being executed only after the preceding sub-program has been executed for all the input geometry data sets.

That method for enabling to generate elementary geometries is preferably executed by means of a device configured for enabling to generate elementary geometries compliant with the present disclosure.

In addition, the present disclosure relates to a method for launching the execution of instructions adapted to generate elementary geometries usable for rendering at least one object of a 3D scene, from input geometry data sets.

According to the present disclosure, those instructions being grouped in at least two ordered sub-programs, each comprising a part of those instructions and being adapted to process the input geometry data sets, and each of the sub-programs that follows a preceding of the sub-programs being arranged for being executed only after that preceding sub-program has been executed for all the input geometry data sets, the method comprises:
- determining among the ordered sub-programs, a starting sub-program from which execution is needed,
- deactivating all sub-programs preceding the starting sub-program,
- activating the starting sub-program and all sub-programs following the starting sub-program.

That method for launching the execution of instructions is preferably executed by means of an execution pipeline device compliant with the present disclosure.

The disclosure further pertains to a computer program comprising a software code adapted to execute one of the methods compliant with the present disclosure.

This computer program can have any form, and notably be embedded in one of the devices according to the present disclosure. In alternative embodiments, it is available separately from an apparatus, and configured to be implemented within that apparatus so as to allow the execution of the process for graphics processing compliant with the present disclosure. This can be done either via a tangible support carrying the computer program or via local or remote downloading. In particular, the computer program can be available as flashing firmware, enabling to update a graphics processing apparatus.

In still other embodiments, the computer program is configured to be exploited in combination with an apparatus for 3D rendering, but remotely, notably through online operations.

The present disclosure further pertains to a non-transitory program storage device, readable by a computer, tangibly embodying a program of instructions executable by the computer to perform a method for enabling to generate elementary geometries or a method for launching the execution of instructions compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. List of figures

The present disclosure will be better understood, and other specific features and advantages will emerge upon reading the following description of particular and non-restrictive illustrative embodiments, the description making reference to the annexed drawings wherein:
- figure 1 diagrammatically shows a graphics processing apparatus comprising the features of a device according to the present disclosure;
- figure 2 is a block diagram of a CPU included in the graphics processing apparatus of figure 1, itself comprising the features of a device according to the present disclosure;
- figure 3 is a block diagram of a GPU belonging to a graphics card of the graphics processing apparatus of figure 1 and cooperating with the CPU of figure 2, showing functionalities pertaining to execution pipelines;
- figure 4 represents schematically functionalities of the CPU and a graphics card of the graphics processing apparatus of figure 1;
- figure 5 shows a set of decorated parse trees obtained from a first example source program by a compiler of the CPU represented on figures 2 and 4;
- figure 6A to 6C details the decorated parse trees of figure 5;
- figure 7 shows a first task-sequential execution pipeline obtained from the decorated parse trees of figures 5 and 6A-6C by the CPU of figures 2 and 4, and exploited in the graphics card of figure 4;
- figure 8 illustrates part of the processing of a dataflow graph for constructing an execution pipeline, exploited in an advantageous implementation of a compiler of the CPU represented on figures 2 and 4;
- figures 9a to 9c diagrammatically show the processing of a loop in a dataflow graph, used with the advantageous implementation of figure 8;
- figure 10 shows a branching dataflow structure obtained from a second example source program by a compiler of the CPU represented on figures 2 and 4;
- figure 11 represents a second task-sequential execution pipeline obtained from the branching dataflow structure of figure 10 by the CPU of figures 2 and 4, and exploited in the graphics card of figure 4;
- figure 12 illustrates the dynamic contents of intermediate and rendering buffers resulting from carrying out the execution pipeline of figure 11 in the graphics card of figure 4;
- figure 13 shows a cycle dataflow structure obtained from a third example source program by a compiler of the CPU represented on figures 2 and 4;
- figure 14 represents a third task-sequential execution pipeline obtained from the cycle dataflow structure of figure 13 by the CPU of figures 2 and 4, and exploited in the graphics card of figure 4;
- figure 15 is a flow chart showing an execution mode of the method for enabling to generate elementary geometries of the present disclosure, by means of the graphics processing apparatus of figure 1;
- figure 16 is a flow chart showing an execution mode of the method for launching the execution of instructions adapted to generate elementary geometries of the present disclosure, by means of the graphics processing apparatus of figure 1;
- figure 17 is a flow chart detailing the setting of a starting node with the execution mode of figure 16.

### 5. Detailed description of embodiments

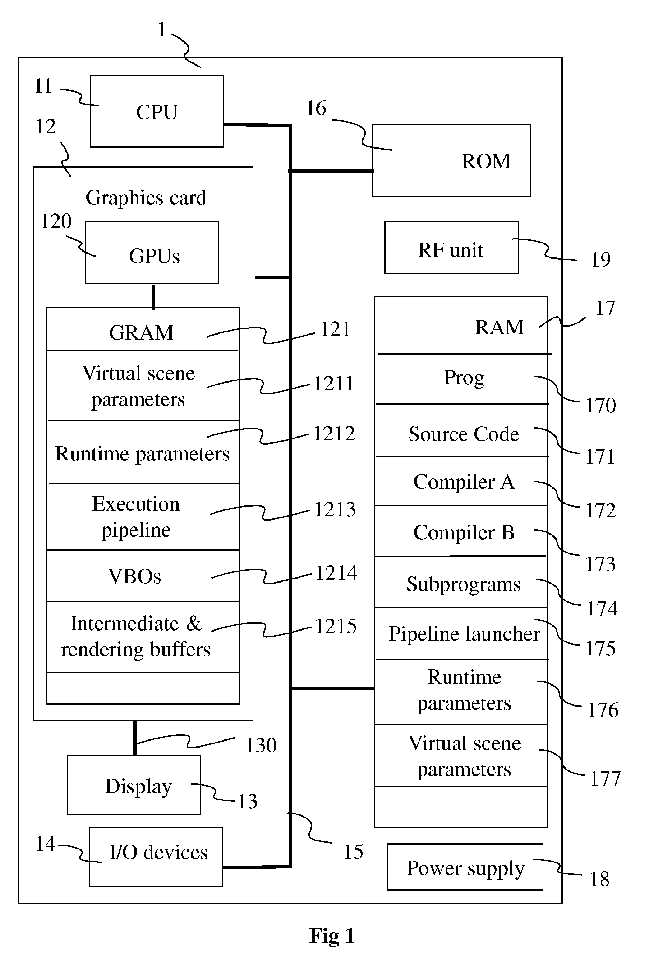

The present disclosure will be described in reference to a particular hardware embodiment of a graphics processing device, as diagrammatically shown on **Figure 1** for a graphics processing apparatus 1.

The apparatus 1 corresponds for example to a personal computer (PC), a laptop, a tablet, a smartphone or a games console - especially specialized games consoles producing and displaying images live.

The apparatus 1 comprises the following elements, connected to each other by a bus 15 of addresses and data that also transports a clock signal:
- a microprocessor 11 (or CPU);
- a graphics card 12 comprising:
   - several Graphical Processor Units (or GPUs) 120,
   - a Graphical Random Access Memory (GRAM) 121;
- a non-volatile memory of ROM (Read Only Memory) type 16;
- a Random Access Memory or RAM 17;
- one or several I/O (Input/Output) devices 14 such as for example a keyboard, a mouse, a joystick, a webcam; other modes for introduction of commands such as for example vocal recognition are also possible;
- a power source 18 ; and
- a radiofrequency unit 19.

The apparatus 1 also comprises a display device 13 of display screen type, directly connected to the graphics card 12 by a bus 130, to display synthesized images calculated and composed in the graphics card, for example live. The use of the dedicated bus 130 to connect the display device 13 to the graphics card 12 offers the advantage of having much greater data transmission bitrates and thus reducing the latency time for the displaying of images composed by the graphics card. According to a variant, a display device is external to the device 1 and is connected to the apparatus 1 by a cable or wirelessly for transmitting the display signals. The apparatus 1, for example the graphics card 12, comprises an interface for transmission or connection adapted to transmit a display signal to an external display means such as for example an LCD or plasma screen or a video-projector. In this respect, the RF unit 19 can be used for wireless transmissions.

According to a variant, the power supply 18 is external to the apparatus 1.

It is noted that the word "register" used in the description of memories 121, 16, and 17 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 11 loads and executes the instructions of the program contained in the RAM 17.

The random access memory 17 notably comprises:
- in a register 170, the operating program of the microprocessor 11 responsible for switching on the apparatus 1,
- in a register 171, a source code comprising instructions for procedural geometry generation, written in a high-level programming language called language A,
- in a register 172, a main compiler noted compiler A, configured to translate the source code of register 171 into a language for execution in the graphics card 12, called language B, the latter being for example GLSL or HLSL,
- in a register 173, an auxiliary compiler or sub-compiler, noted compiler B, configured to translate sub-programs derived from the source code and expressed in language B, into machine language directly interpretable by the graphics card 12,
- in a register 174, sub-programs extracted from the source code,
- in a register 175, a pipeline launcher able to launch a rendering pipeline constructed in the graphics card 12 from the source code;
- in a register 176, runtime parameters exploited in the rendering pipeline constructed in the graphics card 12,
- in a register 177, parameters representative of the scene (for example modelling parameters of the object(s) of the scene, lighting parameters of the scene).

The algorithms carrying out geometry generation and described hereafter in relation with the rendering pipeline are stored in the memory GRAM 121 of the graphics card 12. When switched on and once the parameters representative of the environment and the runtime parameters are loaded into the RAM 17, the graphic processors 120 of the graphics card 12 load those parameters into the GRAM 121 and execute the instructions of these algorithms in the form of microprograms of "shader" type using HLSL or GLSL languages for example. A shader is a program designed to run on some stage of a graphics processor, in the frame of a rendering pipeline.

The random access memory GRAM 121 comprises notably:
- in a register 1211, the parameters representative of the scene,
- in a register 1212, the runtime parameters,
- in a register 1213, the rendering pipeline or execution pipeline, having a generation part obtained as described below,
- in a register 1214, VBOs exploited in the pipeline stored in the register 1213,
- in a register 1215, intermediate buffers and rendering buffer exploited in the pipeline stored in the register 1213.

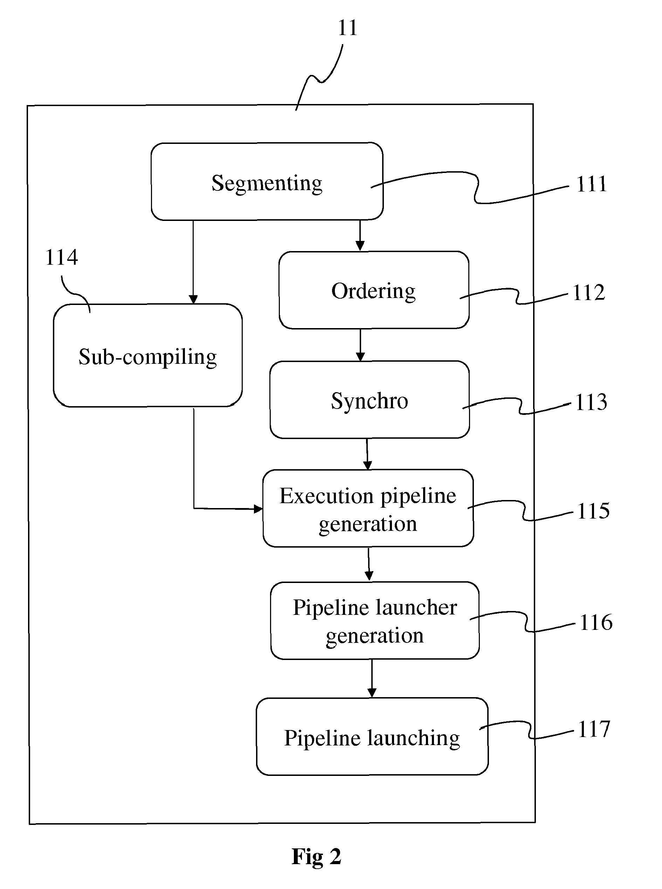

**Figure 2** is dedicated to some functional aspects specific to the CPU 11 of the graphics processing apparatus 1. The represented blocks are purely functional entities, which do not necessarily correspond to physically separated units. In particular, they can be implemented in one or several integrated circuits within the CPU 11.

The CPU 11 includes notably:
- a module 111 for segmenting an input source code into two or more sub-programs, to be exploited in an execution pipeline of the graphics card 12,
- a module 112 for ordering the extracted sub-programs in a sequential order, used in the execution pipeline,
- a module 113 for synchronizing the sequential execution of the sub-programs in the graphics card 12,
- a module 114 for compiling the sub-programs extracted from the source code, called the sub-compiling module 114,
- a module 115 for generating a geometry generation part of the execution pipeline to be run in the graphics card 12,
- a module 116 for generating a pipeline launcher, exploited for launching the execution pipeline,
- a module 117 for pipeline launching, adapted to launch the execution pipeline in particularly efficient ways compliant with the present disclosure.

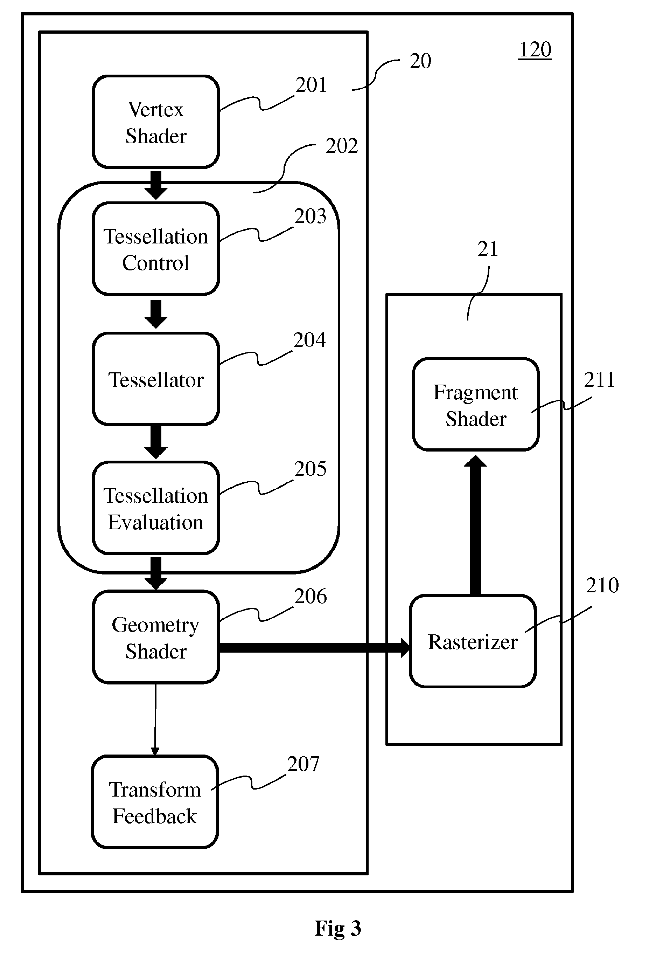

The graphics processors or GPUs 120 of the graphics card 12 are more detailed with reference to **Figure 3****,** which represents some key aspects of carrying out a rendering pipeline exploited in the present disclosure, in the form of functional blocs 201-211. The represented blocks are purely functional entities, which do not necessarily correspond to physically separated units. In particular, they can be implemented in one or several integrated circuits within the GPUs 120. In the illustrated embodiments, those blocks are present in each GPU 120 of the graphics card 12, and are able to be run in parallel for all GPUs 120. Also, it deserves noting that all the represented functional blocs 201-211 are quite familiar to persons skilled in the art, though their present exploitation is specific to the current disclosure.

Each GPU 120 thus includes two main parts associated with rendering pipelines: an upstream part 20 dedicated to geometry generation stages before rasterization; and a downstream part 21 dedicated to rasterization and subsequent fragment stages. In operation, this is applied to one or several input geometries, corresponding respectively to surfaces to be rendered generally called patches. For rendering purpose, each input geometry may be subdivided into several elementary geometries. An input geometry corresponds typically to a quadrilateral or a square but may be any kind of geometric surface, such as e.g. a triangle.

The upstream part 20 comprises a vertex shader 201, which constitutes a first programmable stage associated with the rendering pipeline, handling the processing of each vertex of the input geometries. The vertex shader 201 is implemented as a microprogram comprising instructions for processing each vertex. For each input vertex, associated with user-defined attributes such as e.g. its position, a normal vector and texture coordinates, the vertex shader 201 outputs in operation an output vertex to the next stage of the rendering pipeline. That output vertex is associated with user-defined output attributes, including for example the user-defined input attributes and more, e.g. the binormal estimated from the tangent and the normal corresponding to a vertex. The vertex shader 201 processes each vertex independent vertices, meaning that it processes each vertex independently from the other vertices, i.e. without any information about the other vertices - there is accordingly a 1:1 mapping from input vertices to output vertices. For sake of illustration, if the input geometry corresponds to a quadrilateral, the vertex shader 201 processes four independent input vertices and outputs four independent output vertices, transmitted to the next stage for further processing.

The next stage of the upstream part 20 is a tessellation shader 202, which takes the vertices output from the vertex shader 201, pulls them into primitives, and tessellates the latter. The primitives (or geometric primitives) are the simplest handled geometric objects, or elementary geometries, obtained from the conversion of vertices by graphics language APIs such OpenGL or Direct3D.

The tessellation stage 202 itself comprises three sub-stages or shaders: the tessellation control 203, the tessellator 204 and the tessellation evaluation 205. The tessellation control shader 203 receives an array with the vertices of the input patch. It is activated for each vertex and computes the attributes for each of the vertices that make up the output patch, also stored in an array. In a variant, if some of the attributes associated with a patch are identical (e.g. same colour for each vertex of a patch), the common attribute(s) is/are associated to the patch, which enables to reduce the amount of information to be transmitted - namely: one piece of information associated with the patch instead multiple same pieces of information associated respectively with multiple vertices. The tessellation control shader 203 is also in charge of associating attributes to the output patch, these attributes defining the subdivision degree of the patch. For example, a patch corresponding to a rectangle may be subdivided into i x j quads, i and j being integers comprised between 1 and 64, 128 or 256 ; or into 2 x i x j triangles. The more important the subdivision degree (i.e. the bigger i and j), the smoother the surface to be rendered and the more important the computation needs - so that an appropriate trade-off needs to be adopted. The subdivision degrees of each side of the patch and the interior of the patch are controlled by tessellation levels, the number thereof being controlled by tessellation levels - typically comprised between 0 and 64. For example, there are 4 outer tessellation levels (one for each side) and 2 inner tessellation levels for a patch being a quad, and there 3 outer tessellation levels (one for each side) and 1 inner tessellation levels for a patch being a triangle. At the output of the tessellation control stage 203, a set of vertices with attributes and a set of tessellation levels associated with the patch (corresponding to the input geometry) are produced and transmitted to the tessellator 204.

The tessellator 204 (also called TPG, i.e. Tessellation Primitive Generator) corresponds to the next sub-stage of the tessellation stage 202. It is responsible for generating primitives in function of the input geometry (the patch) and of the tessellation levels set by the tessellation control shader 203. A primitive being defined with its vertices, the tessellator 204 is responsible for the generation of new vertices inside the patch, attributes such as tessellation coordinates being associated with each new vertex. The number of primitives generated by the tessellator stage 204 is directly dependent on the tessellation levels set at previous stage.

The tessellation evaluation shader 205, corresponding to the last sub-stage of the tessellation stage 202, is activated for each newly created vertex, and is responsible for placing an input vertex in function of the tessellation coordinates and possibly other parameters - such as e.g. a displacement map.

The output of the tessellation stage 202, in the form of the generated primitives, is transmitted to the geometry shader 206. The latter, which constitute the next stage of the upstream part 20 associated with the rendering pipeline, has access to all the vertices that form every received primitive. It governs the processing of primitives in function of instructions comprised in this shader 206. Advantageously, those instructions include generating an index value to be assigned to each primitive, in function of the attributes (for example coordinates) associated with at least two vertices of the primitive, as preferably detailed in previous patent application WO 2013/104448 A1 to Thomson Licensing cited above.

A next functional block is the Transform Feedback 207, in charge of retrieving the primitives generated at the previous steps and to record them in Buffer Objects. This enables to re-use those primitives subsequently any number of times, through resubmitting same post-transform data. Buffer Objects are generally adapted to store arrays of unformatted memory in GRAM 121, and are used for storing vertex data, as well as pixel data retrieved from images or the framebuffer. More specifically, the data obtained from the chain of vertex, tessellation and geometry shaders 201, 202 and 206 are stored in VBOs (Vertex Buffer Objects), dedicated to vertex array data. As will be apparent below, those VBOs play a determining role in ensuring synchronization in the preferred embodiments described in the present disclosure.

The outputs of the geometry shader 206 are also transmitted to the downstream part 21 associated with rendering pipelines. They are submitted as inputs to a rasterizer 210, which is responsible for breaking down each individual primitive into discrete elements, based on the data associated with the primitive. This amounts to turning the graphics format governing the primitives into pixels or dots for output on the display device 13 or other output devices, or for storage in a bitmap file format. More precisely, the rasterizer 210 produces fragments, each of which represents a sample-sized segment of a rasterized primitive at the scale of a pixel - namely, the size covered by a fragment corresponds to a pixel area. In this respect, interpolating operations are carried out for the fragments in order to compute data values between vertices - attributes being computed for each pixel based on the vertex attributes and the pixel's distance to each vertex screen position.

A fragment shader 211 of the second part 21 is in charge of processing the fragments generated by the rasterizer 210. The outputs of that fragment shader 211 include colours, depth values and stencil values. More precisely, the fragment shader 211 is adapted to process each fragment so as to obtain a set of colours (e.g. RGB values) and a depth value exploited for example by a z-buffer technique. If a fragment is visible from a given point of view, the colour attributes corresponding to the fragment are then associated with the pixel of the rendered synthesis image.

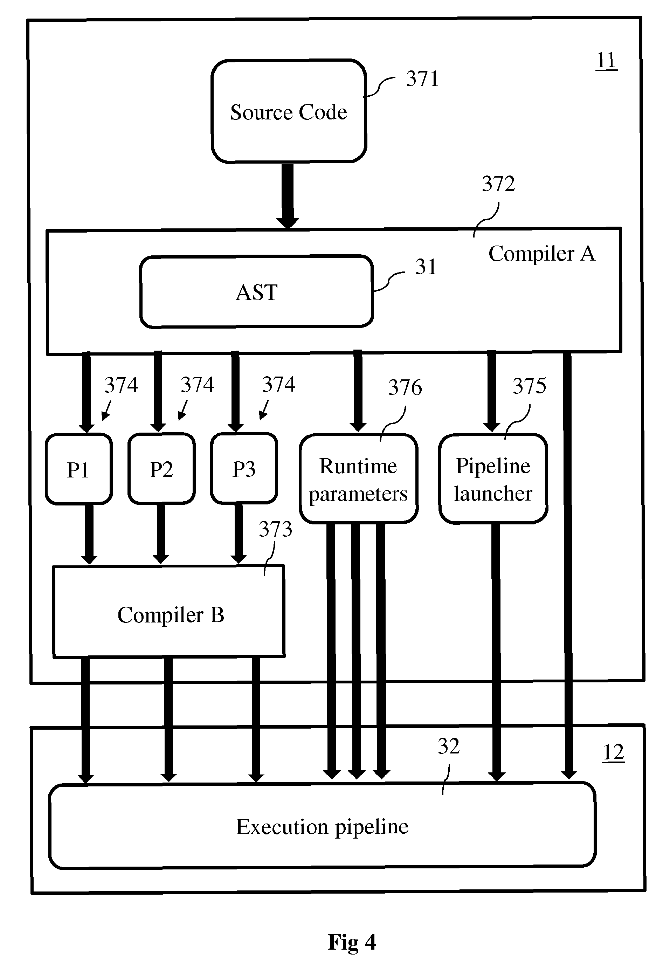

**Figure 4** will provide more details on the geometry generation process according to the present disclosure, by illustrating the cooperation between the CPU 11 and the graphics card 12. As visible on Figure 4, the graphics card 12 includes an execution pipeline 32 created notably by means of CPU 11 and operational for rendering images in the frame of procedural generation based on input geometry data sets.

The CPU 11 comprises a compiler A, referenced 372, configured to translate a source code 371 (recorded in register 171), directed to generating elementary geometries from input geometry data sets, from language A into language B so as to produce the execution pipeline 12 in the graphics card 12. Compiler 372 is adapted to split source code 371 into sub-programs 374 (stored in register 174) upon explicitly user-defined instructions source code 371, defining which rules belong to each sub-program. It is also adapted to proceed with such a splitting when a synchronization step is required, which is for instance the case when a grammar rule has two or more predecessors. The way to force synchronization is then to create a new sub-program starting with this rule.

As specified above in the summary, in a variant, compiler 372 is able to split source code 371 into sub-programs 374 on the grounds of internal program analysis based on heuristic capacities.

Sub-programs 374 further define the nodes of a dataflow graph, having edges corresponding to the sub-program execution dependencies and a root node corresponding to the set of rules containing the grammar axiom rule, i.e. the start rule. In the general situation, this dataflow graph is an RCDG. Compiler 372 is configured to create for each node of the dataflow graph: a translation of sub-programs 374 in language B, an expression-instantiated language A interpreter corresponding to the sub-program source code, an adequate number of intermediate buffers for the storing of intermediate primitives obtained by executing sub-programs, and a Transform Feedback mechanism able to order the sequential sub-program execution at runtime - as will be illustrated below.

Compiler 372 is also configured to provide associated runtime parameters 376 to the execution pipeline 32, and to generate a pipeline launcher 375 (stored in register 175) responsible for launching the execution pipeline 32 - and more precisely the geometry generation part thereof - in the graphics card 12. The runtime parameters 376 are preferably user-controlled.

Compiler A 372 is completed with auxiliary compiler B, referenced 373, configured to translate sub-programs 374 derived from the source code 371 and expressed in language B, into the machine language directly interpretable by the graphics card 12. Compilers 372 and 373 and pipeline launcher 375 are functional entities, which do not necessarily correspond to physically separated units. In particular, they can be implemented in one or several integrated circuits within the CPU 11. In relation with previously described Figure 2, compiler A 372 preferably supports the segmenting, ordering, synchronization, execution pipeline generation and pipeline launcher generation functions of modules 111 to 113, 115 and 116, while compiler B 373 supports the sub-compiling function of module 114 and pipeline launcher 375 supports the pipeline launching function of module 117.

In operation, compiler A 372 turns the source code 371 into a set 31 of decorated parse trees or abstract syntax trees (AST) and derives from them sub-programs 374, which in the example are the three sub-programs P1, P2 and P3. Those sub-programs 374 in language B are then compiled to machine language by compiler B 373 and associated with language A interpreters respectively associated with those sub-programs 374 and created by compiler A 372, so as to form part of the execution pipeline 32.

As specified in the summary part, the creation of the interpreters is preferably based on the technique described in patent application WO 2013/104504 A1 to Thomson Licensing.

In addition, compiler A 372 orders the sub-programs 374 and creates the generation part of the execution pipeline 32 (corresponding to the upstream part 20 on Figure 3). It further constructs a related pipeline launcher 375 and provides the runtime parameters 376 to the execution pipeline 32.

Quite significantly in the present disclosure, the derived sub-programs 374 are such that in the execution pipeline 32, each sub-program can be executed only after a preceding sub-program has been executed for all the input geometry data sets.

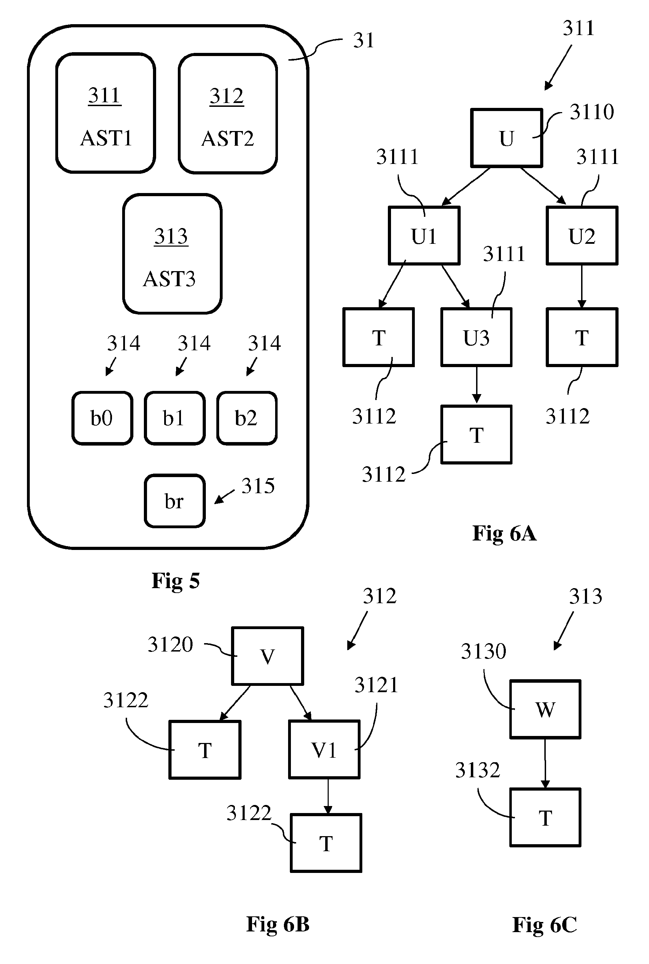

This will be made clearer through a first detailed example illustrated on Figures 5 to 7, in relation with the following source code 371 in language A:
InOut Buffer b0;
   InOut Buffer b1;
   InOut Buffer b2;
in real r1;
   in real r2;

U → SetInput() >>> Split(0,r1){U1,U2};
   U1 →Split(1,r1){T,U3};
   U2 → SetOutput(b0){T};
   U3 → SetOutput(b1){T};
V → SetInput(b0) >>> Split(1,r2){T,V1};
   V1 → SetOutput(b2){T};
W → SetInput(b1,b2){T};
   T → CreateQuad();
where:
- U, V and W provide respective grammar axiom rules (i.e. start rules);
- the instruction "CreateQuad" indicates the creation of primitives constituted by quads;
- the instruction "Split" indicates the splitting of input geometries into two parts along a split axis; the split axis is selected among 0 for the vertical axis and 1 for the horizontal axis, and is designated by a first parameter in parentheses; the corresponding size pertaining to the length of the first area along that split axis is written r1 or r2 and is designated by a second parameter in parentheses; the two starting rules for each of the resulting parts are mentioned in brackets;
- the instruction "Setlnput" indicates the buffers containing the input data for a rule, as arguments in parentheses, and the subsequent rules exploiting those input data, in brackets; an empty value in parentheses corresponds to the start rule for the whole set 31 of ASTs - i.e. the first sub-program P1 having the grammar axiom;
- the instruction "SetOutput" indicates the buffer containing the output data for a rule, as an argument in parentheses, and the subsequent rule producing those output data, in brackets; for the last sub-program P3, it is not required to have that instruction as the output geometry data are stored in the VBO of the rendering pass;
- "InOut Buffer" introduces a buffer exploited for input and output data, designated as intermediate buffer; this includes b0, b1 and b2, adapted to store in the graphics card 12 intermediate elementary geometries (i.e. intermediate primitives); those intermediate buffers are preferably 2D texture samplers;
- "in" designates an input runtime parameter; in source code 371, this concerns r1 and r2.

The instructions Setlnput and SetOutput in the source code 371 are compiler directives, which are only used by compiler 372 and are not interpreted at runtime.

In a variant implementation concerning the Split instruction, the second parameter is a ratio comprised between 0 and 1 and indicating the relative length of the two parts along the split axis. In another variant, the split is greater than 2, so that the subdivision along the split axis leads to at least 3 parts, indicated by 2 or more second parameters instead of 1.

In the illustrative source code 371 above, all relevant instructions are explicitly user-defined for segmenting the latter into sub-programs P1, P2 and P3 of Figure 4 corresponding respectively to start rules U, V and W and for ordering those sub-programs P1, P2 and P3. This is achieved thanks to the Setlnput and SetOutput instructions.

As concerns the segmenting, this is made by explicitly stating U, V and W and by assigning them intermediate buffers b0, b1 and b2.

As regards the ordering of sub-programs, this is made by specifying the relationship between the rules by means of the intermediate buffers b0, b1 and b2. Accordingly, in the source code 371:
- b0 is an output buffer for rule U2 and an input buffer for rule V;
- b1 is an output buffer for rule U3 and an input buffer for rule W;
- b2 is an output buffer for rule V1 and an input buffer for rule W.

Consequently, it results from b0 information that sub-program P1 comes prior to sub-program P2; from b1 information that sub-program P1 comes prior to sub-program P3; and from b2 information that sub-program P2 comes prior to sub-program P3. Namely, ordered sub-programs P1, P2 and P3 constitute a sequential chain - without any branch or cycle.

On **Figure 5****,** the AST set 31 compliant with the example source program 371 above is shown. It includes three decorated parse trees or ASTs 311, 312 and 313, noted AST1, AST2 and AST 3 and corresponding respectively to sub-programs P1, P2 and P3. Those ASTs 311-313 are associated with intermediate buffers 314 b0, b1 and b2, and with a rendering buffer 315 noted br, adapted to store in the graphics card 12 ready-to-render primitives.

As visible on **Figure 6A****,** AST 311 includes a tree root node 3110 corresponding to start rule U, children nodes 3111 corresponding to rules U1, U2 and U3, and three quad creation nodes 3112 corresponding to the instruction T for the creation of quads - hereinafter "T nodes". More precisely, root node 3110 is pointing to two children nodes 3111 associated respectively with U1 and U2. Node 3111 associated with U1 is pointing to one of the T nodes 3112, and to node 3111 associated with U3, itself pointing to one of the T nodes 3112. On its side, child node 3111 associated with U2 is pointing to another of the T nodes 3112.

As concerns AST 312 (**Figure 6B**), it includes a tree root node 3120 corresponding to start rule V, a child node V1 and two T nodes 3122. Root node 3120 is pointing to one of the T nodes 3122 and to the child node 3122, itself pointing to the other T node 3122.

The last AST 313 (**Figure 6C**) includes merely a tree root node 3130 corresponding to start rule W and pointing to a T node 3132.

The outputs of the T nodes 3112, 3122 and 3132 comprise ready-to-render primitives, and can be made available for rendering before the last AST 313 by being stored into rendering buffer 315 br.

With reference to Figure 4, in the present example, sub-programs P1, P2 and P3 are leading to expression-instantiated language A interpreters created by compiler 372, respectively noted I_{P1}, I_{P2} and I_{P3}. Also, the transmitted runtime parameters include r1 and r2.

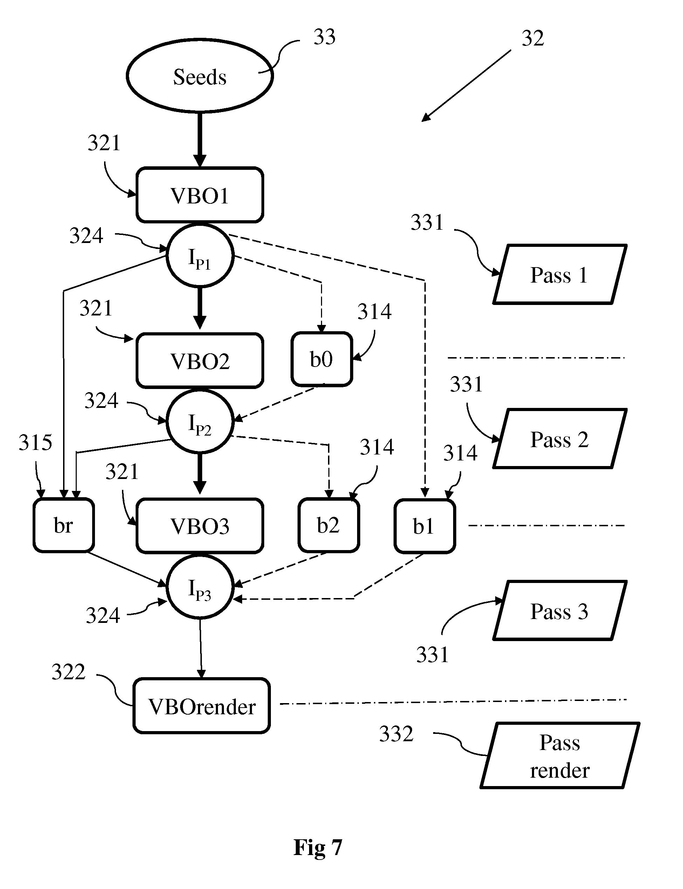

The generated execution pipeline 32, which is ordered and task-sequential, is illustrated on **Figure 7****.** It comprises the three sequential interpreters I_{P1}, I_{P2} and I_{P3}, referenced 324, as well as the intermediary buffers 314: b0 from I_{P1} to I_{P2}, b1 from I_{P1} to I_{P3}, and b2 from I_{P2} to I_{P3}. Also, the rendering buffer 315 br is linking interpreter I_{P1} to interpreter I_{P3}. In the drawing, the solid line for rendering buffer 315 refers to ready-to-render elementary geometries, while the dashed lines for intermediate buffers 314 refer to intermediate geometries.

The use of VBOs is a significant aspect for synchronization in the present disclosure, and is visible on Figure 7. Namely, VBOs 321 noted VBO1, VBO2 and VBO3 are respectively associated with interpreters I_{P1}, I_{P2} and I_{P3} as input Vertex Buffer Objects, while VBO 322, noted VBOrender, is exploited for the rendering of elementary geometries. More precisely:
- VBO1 is adapted to received input geometry data sets or grammar seeds 33 for processing by interpreter I_{P1},
- VBO2 is adapted to receive seeds 33 from I_{P1} and to have them available as inputs for I_{P2},
- VBO3 is adapted to receive seeds 33 from I_{P2} and to have them available as inputs for I_{P3},
- VBOrender is adapted to receive output primitives from I_{P3} for sake of rendering.

Synchronization is ensured from a sub-program interpreter to the next by means of the Transform Feedback mechanism associated with the VBOs 321. Indeed, the seeds 33 become available to the next sub-program interpreter only when all of them have been processed by the previous sub-program interpreter. Thereby, data parallelism can be kept.

Therefore, the execution of the pipeline 32 comprises three intermediate passes 331, noted Pass 1, Pass 2 and Pass 3 and respectively associated with sub-programs P1, P2 and P3, and then a rendering pass 332 following the availability of the output primitives in VBOrender.

In more complex situations than in the previous first example, compiler 372 has to deal with RCDGs including branches and/or cycles. Now, the nodes of an RCDG are ordered to ensure the execution dependencies in agreement with the present disclosure, a node execution being associated with a GPU generation pass. Preferred embodiments for proceeding with such situations with branches or cycles are described below.

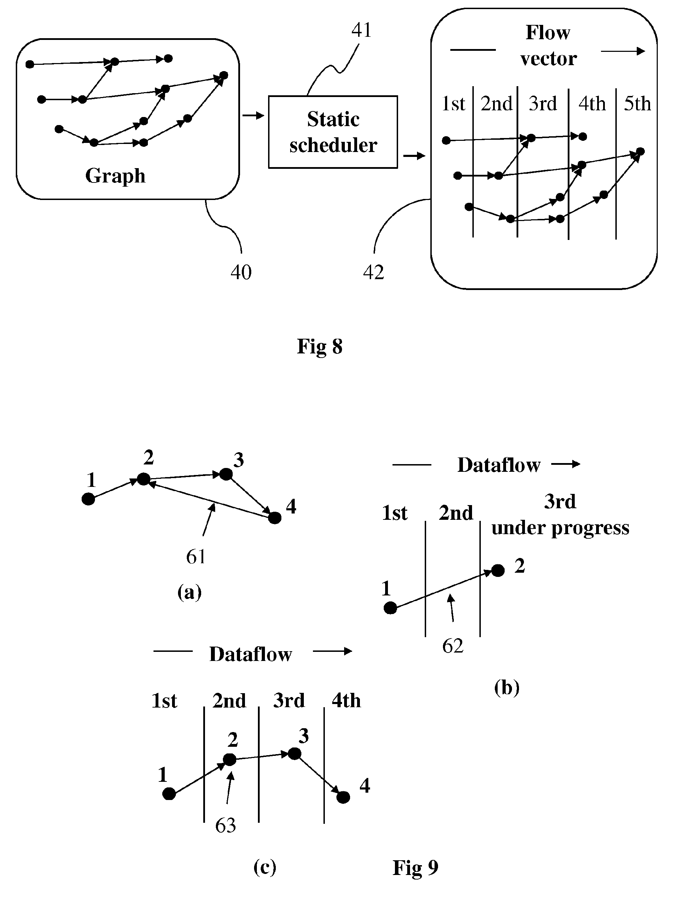

As specified above in the summary part, a preferred implementation consists in exploiting a topological sorting algorithm detecting and breaking cycles, derived from EP-2779101 A1 to Thomson Licensing - the following explanations being partly retrieved from the related disclosure. This is illustrated on **Figure 8****,** which refers back to Figure 4B in that prior publication, subject to appropriate adaptations. Figure 8 illustrates the processing of a dataflow graph 40 by a static scheduler 41, which is part of compiler 372. For sake of illustration, this graph 40 contains branches.

Clusters of nodes to be evaluated, defined from graph 40, form a flow vector 42 - they consist in five clusters (noted 1^{st}, 2^{nd}, 3^{rd}, 4^{th} and 5^{th} on Figure 8) in the illustrated example. The flow vector 42 is generated cluster after cluster based on the node dependencies of the associated graph 40.

First, a dependency counter is associated with each node, so as to assign the nodes to cluster(s) in function of an information representative of the dependencies existing between the nodes in the graph. The dependency counter is advantageously first initialized to the number of direct predecessors to that node. Then, all the nodes having no predecessor (i.e. a null dependency counter) are placed in the first cluster of the flow vector. These nodes have no dependency and are ready to be evaluated. Each insertion of a node in a cluster of the flow vector decrements the dependency counter of all its direct successors. For example, the insertion of the nodes in the first cluster decrements by one the dependency counter associated with direct successors of the nodes assigned to the first cluster. All nodes having an updated dependency counter equal to zero are then assigned to a second cluster and the dependency counters of their direct successor in the graph are each decremented by one. The new nodes having then an updated dependency counter equal to zero are assigned to a third cluster and so on.

Consequently, each cluster comprises nodes that can be evaluated in parallel, which also amounts to say that they can be evaluated in any arbitrary order. Since in the present disclosure, the sub-programs must be executed sequentially, a further step consists in ordering the nodes of each cluster sequentially. Any arbitrary order is then valuable, which may be founded e.g. on the processing order or any initial numbering.

The specific case of cycles is dealt with in relation with **Figures 9a to 9c****.** As illustrated on Figure 9a, a node like node 2 on the figure may indeed be at the focus of a loop 61. Namely, node 2 has two predecessors 1 and 4, one of which (node 4) is dependent on node 2 via node 3. Consequently, as visible on figure 9b, when generating an associated flow vector as described above, the second cluster 62 of the flow vector is empty due to the loop 61, since the condition of a null dependency counter is not met for node 62. Then, all the successor nodes that have been visited but not inserted into the flow vector due to the null dependency counter condition are tagged - for example with a tag "isVisited" taking the value TRUE). In this manner, as illustrated on Figure 9c, once a loop is detected - by an empty vector cluster of the flow vector, it is broken by forcing the addition 63 of a tagged node to this empty cluster.

Proceeding as described above, through detecting and breaking the cycles, enables to implement the sequential ordering of the sub-programs when constructing the flow vector. Anyway, the cycles remain valid for the runtime execution.

More illustrative details are available in EP-2779101 A1, in which complementary information can be found.

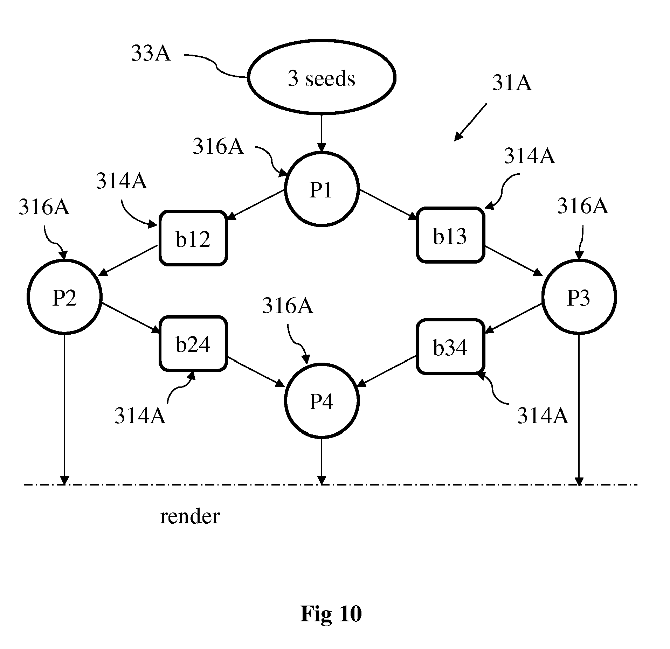

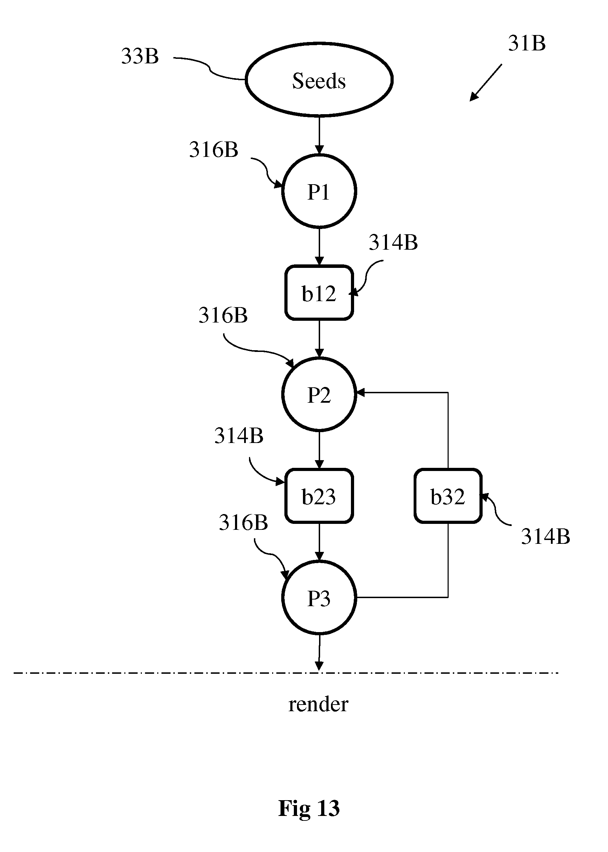

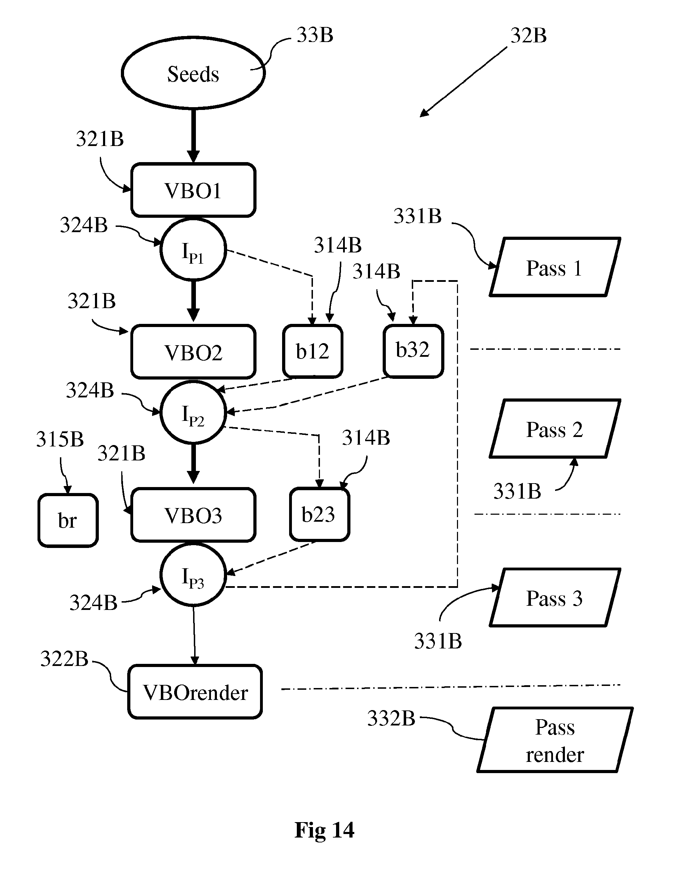

Two further illustrative examples of graphs, the second one with branching in relation with Figures 10 to 12, and the third one with a cycle in relation with Figures 13 and 14, will provide better insight on the involved processes.

In the second example, a branching dataflow structure 31 A as seen on **Figure 10** is provided as input to static scheduler 41. The structure 31 A comprises four sub-programs 316A, noted P1 to P4. Sub-program P1 is branching to the two sub-programs P2 and P3, which are both pointing to P4. Intermediate buffers 314A, noted bij with i and j referring respectively to the origin and target sub-programs, are provided between the connected sub-programs for storing the intermediate primitives. Also, sub-programs P2 and P3 have parts of their output primitives available for rendering, while sub-program P4, constituting a last node in directed structure 31A, is yielding ready-to-render primitives.

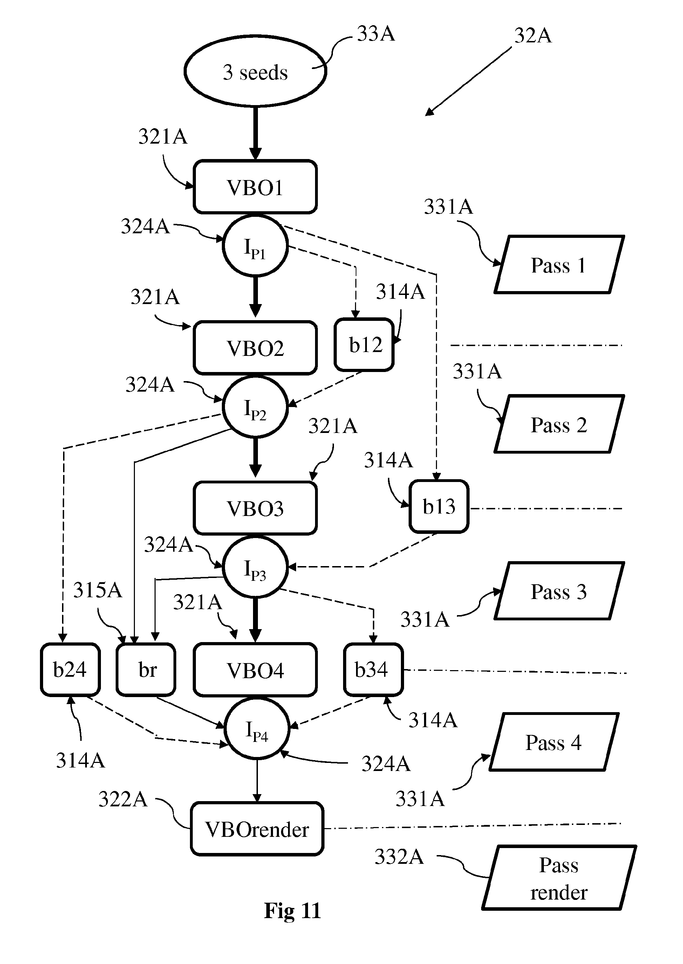

The dataflow structure 31 A is reflected in a resulting task-sequential execution pipeline 32A, represented on **Figure 11****.** This pipeline 32A provides a 4-pass procedural generation with 3 grammar seeds 33A. It includes four interpreters 324A noted I_{P1}, I_{P2}, I_{P3} and I_{P4} for respectively sub-programs P1 to P4, together with input VBOs 321A, respectively noted VBO1, VBO2, VBO3 and VBO4 for interpreters I_{P1} to I_{P4}, and with rendering VBO 322A, noted VBOrender, at the output of interpreter I_{P4}. Also, intermediate buffers 314A, in line with those represented on Figure 10, are available between the appropriate sub-program interpreters 324A. A rendering buffer 315A, noted br, is further provided for recording ready-to-render primitives at the output of interpreters I_{P2} and I_{P3}. The execution pipeline 32A is adapted to four intermediate geometry generation passes 331A, noted respectively Pass 1 to Pass 4 and associated respectively with sub-programs P1 to P4, followed by a rendering pass 332A.

As apparent from this arrangement, though sub-program P2 has been ordered prior to P3, the reverse would be valuable as well insofar as P2 and P3 correspond to parallel nodes.

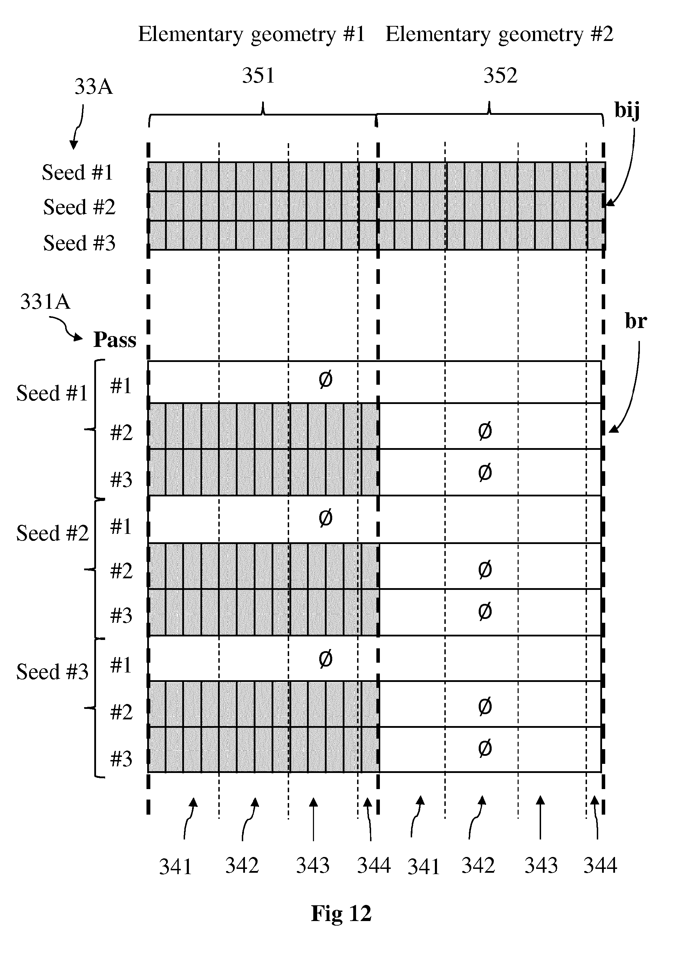

The dynamic contents of the buffers 314A bij and 315A br associated with the pipeline 32A are shown on **Figure 12** during the 4-pass procedural generation with the grammar seeds 33A. Each of those buffers comprises a number of memory boxes, each of which corresponds e.g. to a homogeneous vector having four components, those boxes being associated within groups of memory data. The buffers are thus partitioned into parts respectively dedicated to elementary geometries, such as parts 351 and 352 corresponding respectively to elementary geometries numbers 1 and 2 represented on Figure 12.

For sake of clarity, it is specified that the elementary geometries numbered 1 and 2 are different from one buffer to another, whether the buffers be intermediate buffers bij (the elementary geometries being then intermediate primitives) or rendering buffer br (the elementary geometries being then ready-to-render primitives exploited at the next stages of the execution pipeline 32). The presentation on Figure 12 on same columns for the elementary geometries is merely illustrative of the correspondence of structure between the buffers.

Each of those parts 351, 352 is itself divided into sub-parts 341-344, respectively directed to various kinds of data. These include:
- sub-part 341 for storing input quad coordinates, consisting in the four components (homogeneous coordinates) of the respective vertices of the initial quad - such shapes being used as rendering primitives;
- sub-part 342 for storing a matrix transform to be applied to the initial quad, involving translation, rotation and scale, which corresponds to cumulating the instructions for geometric transformations associated with the considered sub-program;
- sub-part 343 for storing a barycentric transform matrix, providing a deformation to be applied to the initial quad and corresponding to the cumulated instructions of barycentric transformations associated with the considered sub-program;
- sub-part 344 for storing colour data, as a field having four real components enabling to encode various types of information to be applied to the quad, such as notably RGB colour (Red Green Blue) and a texture identifier.

In operation, buffers 314A bij and 315A br are exploited in parallel for the three seeds 33A. Each of the intermediate buffers 314A is written and read at the passes 331 A corresponding to its position. For example, buffer b13 is filled by intermediate primitives provided by interpreter I_{P1} during Pass 1, and those data are retrieved by interpreter I_{P3} at the beginning of Pass 3. As concerns the rendering buffer 315A br, it is empty (which is represented by sign "Ø" on Figure 12) during Pass 1 since no ready-to-render data are made available by sub-program P1. Its content is then filled at both Pass 2 and Pass 3, due to the production of rendering primitives by both sub-programs P2 and P3. In the represented illustration on Figure 12, the ready-to-render data concern only the first elementary geometry 351, and not the second one 352, which can be the case when only one primitive is rendered per grammar seed.

For sake of still enhanced clarity, a practical application will now be described in relation with that second example, through a procedural modelling in which the last set of instructions (contained in sub-program P4) depends on the execution of the former sets of instructions (associated with sub-programs P1, P2 and P3).

In this application, a set of six buildings is modelled, including three style-S1 and three style-S2 buildings. Also, three one-to-one footbridges must connect buildings of different styles. Then:
- each of the three seeds 33A corresponds to the footprint of a style-S1 building - four points forming a quad, the pipeline 32A being executed three times in parallel (data parallelism for each seed);
- the instruction set of sub-program P1 creates for each of the seeds 33A a new quad corresponding to the footprint of a style-S2 building and positions it in space;
- the instruction set of sub-program P2 generates the style-S1 building; in this respect:
   - input intermediate buffer b12 contains a unique elementary geometry per seed, namely the 3D coordinates of the four points of the initial quad (seed) without additional transformation - the linear and barycentric transformation matrices being equal to identity and the colour field not being used;
   - the instruction set comprises notably a rule of extrusion of the initial quad, then the generation of multiple windows at different floors in compliance with style-S1;
   - the ready-to-render elements are directly put into the rendering buffer br - these pertain to the elementary geometries corresponding to various elements of the façade generated with sub-program P2, such as windows and doors;
   - the output intermediate buffer b24 contains a unique elementary geometry per seed, corresponding to the quad on which the footbridge will be secured;
- the instruction set of sub-program P3 generates the style-S2 building; in this respect:
   - input intermediate buffer b13 contains a unique elementary geometry per seed, namely the 3D coordinates of the four points of the initial quad (seed) with a transformation matrix corresponding to a translation - the barycentric transformation matrix being equal to identity and the colour field not being used;
   - the instruction set comprises notably a rule of extrusion of the initial quad, then the generation of multiple windows at different floors in compliance with style-S2;
   - the ready-to-render elements are directly put into the rendering buffer br - these pertain to the elementary geometries corresponding to various elements of the façade generated with sub-program P3, such as windows and doors;
   - the output intermediate buffer b34 contains a unique elementary geometry per seed, corresponding to the quad on which the footbridge will be secured;
- the instruction set of sub-program P4 generates a footbridge for each seed from the two attachment quads stored in intermediate buffers b24 and b34 - the generated elements of the footbridge being pushed into the rendering VBO 322A of the last pass 332A.

In the third example, a cycle dataflow structure 31 B as seen on **Figure 13** is provided as input to static scheduler 41. The structure 31 B comprises three sub-programs 316B, noted P1 to P3. Sub-program P1 is followed by sub-program P2, which is followed by sub-program P3. In addition, a loop is going back from sub-program P3 to P2. Intermediate buffers 314B, noted bij with i and j referring respectively to the origin and target sub-programs, are provided between the connected sub-programs for storing the intermediate primitives. They thereby include b12, b23 and b32.

The dataflow structure 31 B is reflected in a resulting task-sequential execution pipeline 32B, represented on **Figure 14****.** This pipeline 32B provides a 3-pass procedural generation with grammar seeds 33B. It includes three interpreters 324B noted I_{P1}, I_{P2} and I_{P3} for respectively sub-programs P1 to P3, together with input VBOs 321 B, respectively noted VBO1, VBO2 and VBO3 for interpreters I_{P1} to I_{P3}, and with rendering VBO 322B, noted VBOrender, at the output of interpreter I_{P3}. Also, intermediate buffers 314B, in line with those represented on Figure 13, are available between the appropriate sub-program interpreters 324B. A rendering buffer 315B, noted br, is provided but unused. The execution pipeline 32B is adapted to three intermediate geometry generation passes 331 B, noted respectively Pass 1 to Pass 3 and associated respectively with sub-programs P1 to P3, followed by a rendering pass 332B.

As apparent from this arrangement, the sequential order of interpreters I_{P1} to I_{P3} is established without consideration of the loop pointing from sub-program P3 to P2, but the intermediate buffer b32 is provided for execution at runtime.

In operation, there is one cycle execution per frame, the buffer b32 being empty at the first pipeline execution.

For sake of still enhanced clarity, another practical application will be described in relation with that third example. In this application, a procedural modelling needs to start from a non-constant current state, which depends on the preceding generation.

In this application, a set of wind-driven small branches with leaves must be generated and rendered on-the-fly. With time, the branches have changing positions and lose progressively sub-branches and leaves. Then:
- a seed corresponds to the position of a branch - so that the number of seeds is equal to the number of branches to be generated;
- the set of instructions of sub-program P1 positions those seeds in space; in this respect:
   - output intermediate buffer b12 contains a unique elementary geometry per seed, namely the 3D coordinates of the four points of the initial quad (seed), with a transformation matrix linked to translation and rotation - the barycentric transformation matrix being equal to identity and the colour field being used for storing the initial number of sub-branches to be generated;
- the set of instructions of sub-program P2 generates a branch knowing its position and the number of sub-branches to be generated; in this respect:
   - the instruction set comprises notably rules for extrusion, branching, rotation, so as to generated the sub-tree structure;
   - output intermediate buffer b23 contains a number of elementary geometries per seed, corresponding to the various branch elements with sub-program P2 - such as sub-branches and leaves;
- the set of instructions of sub-program P3:
   - copies all elementary geometries into the rendering buffer 322B for the rendering pass 332B;
   - computes the new position of the branches and the reduction in the number of sub-branches in function of various climate parameters
- such as the wind strength and direction;
   - output intermediate buffer b32 contains a unique elementary geometry per seed, namely the 3D coordinates of the four points of the initial quad - the linear and barycentric transformation matrices being equal to identity, and the colour field storing the new number of sub-branches to be generated.

The execution pipeline 32 created by compiler 372 is a CPU-based lazy execution pipeline launcher, which at runtime defines a starting node from which the task-sequential pipeline 32 has to be re-executed for the concerned frame. This execution is advantageously controlled by the activation and deactivation of the corresponding Transform Feedback mechanisms.

In operation:
- all the predecessors of the starting node have their Transform Feedback mechanism deactivated, keeping in cache the generated geometries;
- the starting node and the subsequent nodes have their Transform Feedback mechanism activated, which corresponds to the new generation requested for the concerned frame.

In specific embodiments, a distinction is basically made between dataflow with no cycle, and dataflow with cycle (which means an active cycle, with pending iterations). In the former case, at runtime:
- at the first frame, all the nodes are executed and the generated geometries are rendered;
- then the launcher 375 enters in a lazy mode by setting the starting node to the last node (in charge of the rendering pass); consequently, only the rendering pass using the cached generated geometries is executed for the frames after the first one;
- when however a grammar parameter is modified on-the-fly, the launcher 375:
   - sets the starting node to the node corresponding to the first sub-program to which the modified grammar parameter belongs;
   - calls the pipeline execution for the concerned frame; and then
   - enters into the lazy mode by setting the starting node to the last node.

By contrast, in the case of a dataflow with cycle, at runtime:
- all the nodes are executed and the generated geometries are rendered at the first frame;
- then the launcher 375 enters into a lazy mode by setting the starting node to the first node N₀ of the first cycle (which corresponds e.g. to interpreter I_{P2} on Figure 14); the cycle is thus re-evaluated on a frame basis, on the ground of one cycle execution per frame;
- when a grammar parameter is modified on-the-fly, the launcher 375:
   - sets the starting node to the node corresponding to the first sub-program to which the modified grammar parameter belongs, if this node is a predecessor of node N₀;
   - calls the pipeline execution for the concerned frame; and then
   - enters into the lazy mode by setting the starting node to node N₀.

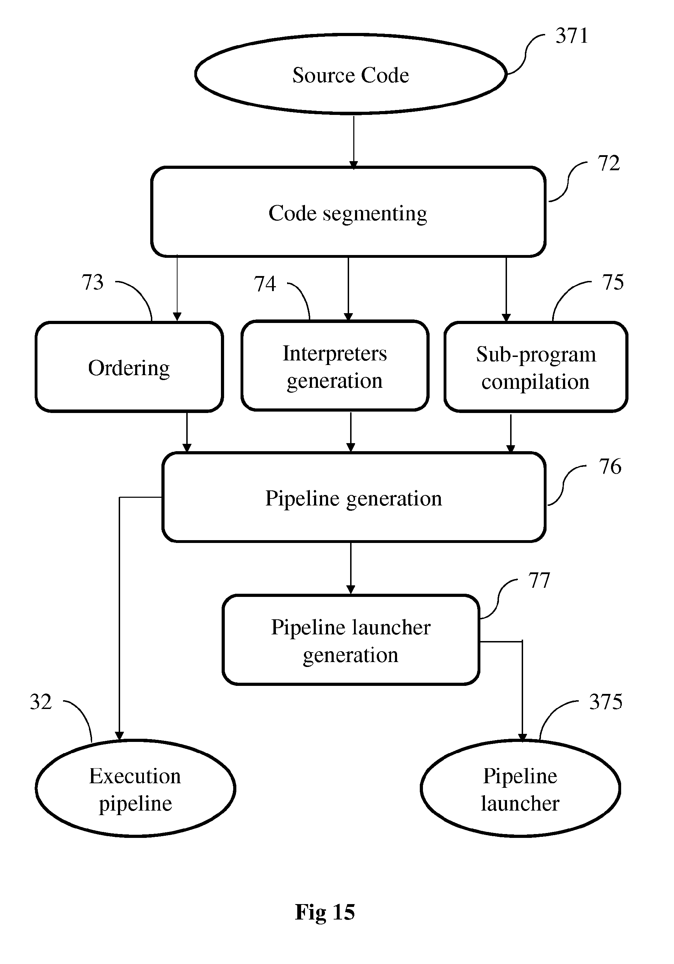

The main steps for creating the tools enabling geometry generation in compliance with the present disclosure, as illustrated on **Figure 15****,** finally include when starting from source code 371:
- segmenting the source code 371 in language A into sub-programs in language B in step 72;
- ordering the obtained sub-programs in step 73;
- generating expression-instantiated language A interpreters for the respective sub-programs in step 74;
- compiling the obtained sub-programs from language B to machine language in step 75;
- generating the execution pipeline 32, based on the segmenting, ordering, interpreter generation and sub-program compilation, in step 76;
- generating the pipeline launcher 375 adapted to the generated pipeline 32, in step 77.

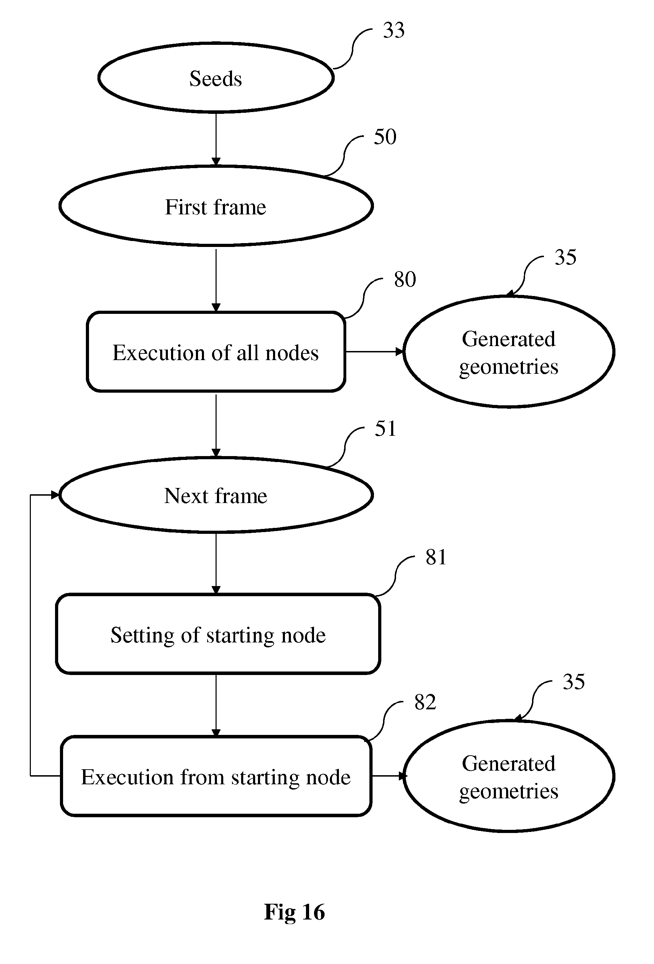

The main steps for launching the execution of the pipeline 32 in compliance with the present disclosure, as illustrated on **Figure 16****,** include the following steps when inputting grammar seeds 33:
- considering a first frame 50;
- executing sequentially all ordered nodes of the dataflow graph for seeds 33 and frame 50, so as to generate geometries 35, in step 80;
- considering next frame 51;
- setting the starting node according to the selection algorithm for next frame 51, in step 81;
- executing sequentially the nodes from the set starting node for seeds 33 and frame 51 so as to generate geometries 35, in step 82.

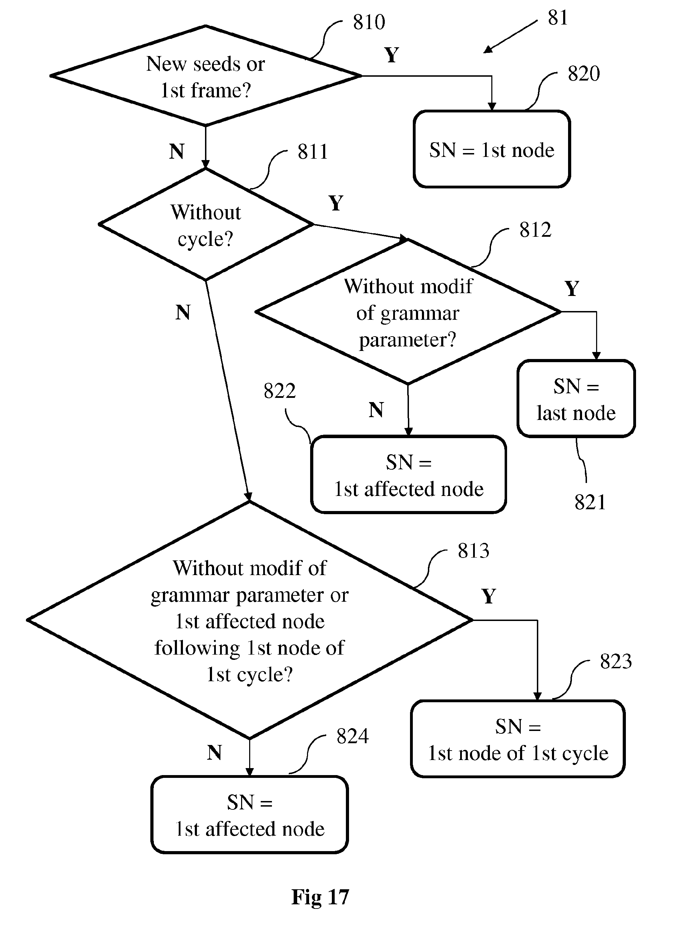

More precisely regarding the setting of the starting node in step 81, it is proceeded as follows as shown on **Figure 17****:**
- check whether new seeds are input, or whether considered frame is the first frame, in step 810;
- if this is true, set the starting node to the first node in step 820;
- if no new seeds are input and the frame is not the first frame, check whether no cycle is present in the dataflow graph, in step 811;
- is no cycle is present, check whether a modification of grammar parameter takes place, in step 812;
   - if no modification of a grammar parameter takes place, set the starting node to the last node, in step 821;
   - if a modification of a grammar parameter takes place, set the starting node to the first node affected by the parameter modification, in step 822;
- if at least one cycle is present, check whether a modification of grammar parameter takes place, or whether the first node affected by the parameter modification is following (directly or not) the first node of the first cycle, in step 812;
   - if this is true, set the starting node to the first node of the first cycle, in step 823;
   - if a modification of a grammar parameter takes place and the first affected node is preceding (directly or not) the first node of the first cycle, set the starting node to the first affected node, in step 824.

Naturally, the present disclosure is not limited to the embodiments previously described.

In particular, the present disclosure extends to any device implementing the described methods. The applications of the present disclosure are not limited to a live utilisation but also extend to any other utilisation for which procedural generation can be exploited, for example for processing known as postproduction processing in a recording studio for the display of synthesis images.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device.

Implementations of the various processes and features described herein may be embodied in a variety of different equipment or applications, particularly, for example, a web server, a game console, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. Device (1, 11) configured for enabling to generate elementary geometries (35, 351, 352) usable for rendering at least an object of a 3D scene, from a source program (371) comprising a plurality of instructions adapted to generate the elementary geometries (35) from input geometry data sets (33), said device (1, 11) being configured to transform said instructions into a code executable in a rendering pipeline (32) by at least one graphics processor (12, 120) for generating the elementary geometries (35),
**characterized in that** said device (1, 11) comprises:
- a segmenting module (111) adapted to segment said source program (371) into at least two sub-programs (374), each comprising a part of said instructions and being adapted to process said input geometry data sets (33),
- an ordering module (112) adapted to order said sub-programs (374) in function of said instructions,
said segmenting module (111) and ordering module (112) being configured such that each of said ordered sub-programs (324) following a preceding of said ordered sub-programs is configured in said executable code for being executed only after said preceding sub-program has been executed for all said input geometry data sets (33).

2. Device (1, 11) according to claim 1, **characterized in that** said device (1, 11) further comprises a synchronization module (113) configured to associate each of said preceding sub-programs (324) with a respective synchronization memory element (321), said synchronization memory element being adapted to receive said input geometry data sets (33) from said preceding sub-program and to make said input geometry data sets available to said following sub-program, said synchronization module (113) being further configured to make said input geometry data sets (33) available to said following sub-program in said synchronization memory element (321) only when said preceding sub-program has been executed for all said input geometry data sets (33).

3. Device (1, 11) according to claim 2, **characterized in that** said synchronization memory elements (321) are corresponding to memory elements usually exploited in said rendering pipeline (32) for recording output elementary geometries made available to later rendering operations.

4. Device (1, 11) according to any of the preceding claims, **characterized in that** said segmenting module (111) is further configured so that each of said sub-programs (324) is adapted to be executed in parallel for said respective input geometry data sets (33).

5. Device (1, 11) according to any of the preceding claims, **characterized in that** said segmenting module (111) is further configured to segment said source program (371) according to segmentation instructions comprised in said instructions and **in that** said ordering module (112) is further configured to order said sub-programs (324) according to parameters associated with said segmentation instructions.

6. Device (1, 11) according to any of the preceding claims, **characterized in that** said segmenting module (111) and said ordering module (112) are configured to associate at least one of said preceding sub-programs and at least one of said following sub-programs (324) with at least one intermediate memory element (314), said at least one memory element being adapted to store intermediate elementary geometries generated by executing said at least one preceding sub-program and exploited by said at least one following sub-program, and **in that** said at least one intermediate memory element (314) being specified in said source program (371), said ordering module (112) is configured to order said sub-programs (324) in function of said at least one intermediate memory element (314).

7. Device (1, 11) according to any of the preceding claims, **characterized in that** said ordering module (112) is configured to order said sub-programs (324) by determining said sub-programs to be executed sequentially and said sub-programs able to be executed in parallel, and by ordering said sub-programs able to be executed in parallel in a successive order.

8. Device (1, 11) according to any of the preceding claims, **characterized in that** said ordering module (112) is configured to order said sub-programs (324) without consideration of any feedback loop between sub-programs.

9. Device (1, 11) according to any of the preceding claims, **characterized in that** said source program (371) being expressed in a source language, said device comprises at least one compiling module (111-113, 115, 116, 372) (111-113, 115, 116, 372) adapted to translate said sub-programs (374) expressed in the source language to a target language supported by said at least one graphics processor (12, 120),
and **in that** said source program comprising at least one rule not supported by said at least one graphics processor (12, 120), said at least one compiling module (111-113, 115, 116, 372) is configured for:
- generating for each of said sub-programs (374) a directed graph representative of said sub-program,
- generating a first data structure, the first data structure corresponding to a flat representation of said directed graph and comprising at least an identifier identifying said at least one rule,
- generating a second data structure comprising interpretation instructions adapted for interpreting the first data structure by using said identifier, the interpretation instructions being coded in said target language.

10. Execution pipeline device (1, 12, 120) comprising at least one processor configured to launch the execution of instructions (32) adapted to generate elementary geometries (35, 351, 352) usable for rendering at least one object of a 3D scene, from input geometry data sets (33),
**characterized in that** said instructions being grouped into at least two ordered sub-programs (324), each comprising a part of said instructions and being adapted to process said input geometry data sets (33), and each of said sub-programs that follows a preceding of said sub-programs being arranged for being executed only after said preceding sub-program has been executed for all said input geometry data sets (33),
said at least one processor is further configured to:
- determine among said ordered sub-programs, a starting sub-program (820-824) from which execution is needed,
- deactivate all sub-programs preceding said starting sub-program,
- activate said starting sub-program and all sub-programs following said starting sub-program,
said execution pipeline device (1, 12, 120) being preferably adapted to a device (1, 11) configured for enabling to generate elementary geometries according to any of the preceding claims.

11. Execution pipeline device (1, 12, 120) according to claim 10, **characterized in that** said at least one processor is further configured to determine said starting sub-program (820-824) for one frame (50, 51) when said sub-programs (324) involve no active feedback loop:
- when said frame (350) is a first frame, by setting said starting sub-program to the first of said sub-programs (820),
- when said frame (351) is a special frame for which at least one parameter associated with at least one of said sub-programs is modified on-the-fly, by setting said starting sub-program to the first of said at least one associated sub-program (822),
- when said frame (351) is a frame different from said first frame (350) and from said special frame, by setting said starting sub-program to the last of said sub-programs (821), associated with rendering said at least one object of a 3D scene.

12. Execution pipeline device (1, 12, 120) according to any of claims 10 or 11, **characterized in that** said at least one processor is further configured to determine said starting sub-program (820-824) for one frame (50, 51) when said sub-programs (324) involve at least one active feedback loop from at least one next sub-program to at least one previous sub-program among said sub-programs:
- when said frame (350) is a first frame, by setting said starting sub-program to the first of said sub-programs (820),
- when said frame (351) is a special frame for which at least one parameter associated with at least one of said sub-programs is modified on-the-fly and said at least one associated sub-program is preceding the first of said at least one previous sub-program, by setting said starting sub-program to the first of said at least one associated sub-program (824),
- when said frame (351) is a frame different from said first frame and from said special frame, by setting said starting sub-program to the first of said at least one previous sub-program corresponding to said at least one active feedback loop (823).

13. Method for enabling to generate elementary geometries (35, 351, 352) usable for rendering at least an object of a 3D scene, from a source program (371) comprising a plurality of instructions adapted to generate the elementary geometries from input geometry data sets (33),
said method including transforming by a device (1, 11) said instructions into a code executable in a rendering pipeline (32) by at least one graphics processor (12, 120) for generating the elementary geometries,
**characterized in that** said method comprises:
- segmenting (72) said source program (371) into at least two sub-programs (374), each comprising a part of said instructions and being adapted to process said input geometry data sets (33),
- ordering (73) said sub-programs in function of said instructions,
said segmenting (72) and ordering (73) being such that each of said ordered sub-programs (324) following a preceding of said ordered sub-programs is configured in said executable code for being executed only after said preceding sub-program has been executed for all said input geometry data sets (33).

14. Method for launching the execution of instructions (32) adapted to generate elementary geometries (35, 351, 352) usable for rendering at least one object of a 3D scene, from input geometry data sets (33),
**characterized in that** said instructions being grouped in at least two ordered sub-programs (324), each comprising a part of said instructions and being adapted to process said input geometry data sets (33), and each of said sub-programs that follows a preceding of said sub-programs being arranged for being executed only after said preceding sub-program has been executed for all said input geometry data sets,
said method comprises:
- determining (81) among said ordered sub-programs (324), a starting sub-program (820-824) from which execution is needed,
- deactivating all sub-programs preceding said starting sub-program,
- activating said starting sub-program and all sub-programs following said starting sub-program.

15. Computer program comprising a software code adapted to execute a method compliant with claim 13 or 14.
